(19) Europäisches Patentamt
European Patent Office
Office européen des brevets

(11) EP 3 010 630 B1

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(21) Anmeldenummer: **14725481.7**

(22) Anmeldetag: **22.05.2014**

(51) Internationale Patentklassifikation (IPC):
***B01D 67/00*** $^{(2006.01)}$ ***B01D 69/08*** $^{(2006.01)}$
***B01D 71/64*** $^{(2006.01)}$

(52) Gemeinsame Patentklassifikation (CPC):
**B01D 71/64; B01D 67/0009; B01D 67/0083; B01D 69/08;** B01D 2323/08

(86) Internationale Anmeldenummer:
**PCT/EP2014/060523**

(87) Internationale Veröffentlichungsnummer:
**WO 2014/202324 (24.12.2014 Gazette 2014/52)**

(54) **VERFAHREN ZUR HERSTELLUNG VON POLYIMIDMEMBRANEN**

METHOD FOR MANUFACTURING POLYIMIDE MEMBRANES

PROCÉDÉ DESTINÉ À LA FABRICATION DE MEMBRANES POLYIMIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2013 EP 13173227**

(43) Veröffentlichungstag der Anmeldung:
**27.04.2016 Patentblatt 2016/17**

(73) Patentinhaber: **Evonik Fibres GmbH**
**4861 Schörfling am Attersee (AT)**

(72) Erfinder:
- **VISSER, Tymen**
  **A-4881 Straß im Attergau (AT)**
- **UNGERANK, Markus**
  **A-4320 Perg (AT)**
- **BALSTER, Jörg**
  **A-4861 Schörfling am Attersee (AT)**
- **FÜHRER, Christoph**
  **A-4812 Pinsdorf (AT)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 0 321 569**
**WO-A1-2006/068626**
**WO-A1-2006/092677**
**WO-A1-2011/009919**
**US-A1- 2009 286 078**
**US-A1- 2010 243 567**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Gebiet der Erfindung

Die Erfindung betrifft Polyimidmembranen, bevorzugt aus einer P84-Modifikation, besonders bevorzugt aus P84 Typ 70 oder P84 HT, mit verbesserten chemischen und physikalischen Eigenschaften, ein Verfahren zu deren Herstellung, sowie deren Verwendung.

### Stand der Technik

Zur Herstellung von Phaseninversionsmembranen werden im allgemeinen Polymere benötigt, die in herkömmlichen mit Wasser mischbaren Lösungsmitteln löslich sind. Es werden viele Additive wie Colösungsmittel, Nicht-Lösungsmittel, Porenbildner, Hydrophilierungsmittel etc. hinzugemischt, um die Eigenschaften der Membranen zu beeinflussen. Hierbei wird gewöhnlich von einem Polymergranulat oder -pulver ausgegangen und daraus die Gießlösung durch anteigen mit den Lösungsmitteln und den Additiven hergestellt. Entscheidend für den Erfolg in der Membranherstellung sind u. a. die Molmasse und die Molmassenverteilung des verwendeten Polymeren. Generell verlangt man Polymere mit hohen Molmassen und schmaler Verteilung.

P84 ist ein in der Literatur allgemein bekanntes Polymer und wird für die Herstellung von Flachmembranen und Hohlfasermembranen verwendet (US 2006/0156920, WO 04050223, US 7018445, US 5635067, EP 1457253, US 7169885, US 20040177753, US 7025804, J.N Barsema et al, J. of Membrane Science, 216, 2003, 195 - 205; J. Ren et al, J. of Membrane Science, 241, 2004, 305 - 314; Liu et al, Chem. Eng. Sci., 60, 2005, 6674 - 6686; J. Ren et al, J. of Membrane Science, 248, 2005, 177 - 188). P84 wird in mehreren Modifikationen, insbesondere P84 Typ 70 und P84 HT, von der Fa. HP Polymer in Lenzing/Österreich in Pulverform vertrieben. Die Kunden lösen dieses Pulver zur Herstellung der Gießlösung dann wieder in aprotisch dipolaren Lösungsmitteln auf und versetzen es mit Additiven. Aus der erhaltenen Lösung können dann Membranen hergestellt werden. Gemäß US 2006/156920 hat diese Methode jedoch den Nachteil, dass die so hergestellten Folien und Membranen sehr brüchig sind. Es wird daher vorgeschlagen Blends aus P84 und anderen Polymeren herzustellen, um stabile Folien und Hohlfasermembranen zu erhalten. Nachteilig an Blends ist aber, dass die sehr guten Trenneigenschaften für Gase, Plastifizierungsstabilitäten gegenüber $CO_2$ und Chemikalienstabilitäten von P84 gegenüber vielen Lösungsmitteln zum Teil durch die Beimischung anderer Polymere gestört oder sogar zerstört werden.

In der WO 2006/092677 wird darauf hingewiesen, dass das Pulver von P84 Typ 70 und P84 HT eine zu geringe Molmasse aufweist. Es wird daher vorgeschlagen das Pulver einer thermischen Behandlung zu unterziehen um eine genügend hohe Molmassen zu erhalten. Hierbei sind die Behandlungsdauer und das Verfahren sehr kritisch und führen zu Pulvern mit leicht unterschiedlichen Eigenschaften, die wiederum Gießlösungen mit unterschiedlichen Viskositäten ergeben. Somit ist eine gleichmäßige Herstellung der Polymermembranen nur schwer möglich. Ferner wurde gefunden, dass nach diesem Verfahren hergestellte Membranen eine ungenügende thermische Stabilität aufweist. Es hat sich nämlich gezeigt, dass der durch die Temperung des Pulvers erzielte Molekulargewichtsaufbau reversibel ist. D.h. beim Einsatz dieser Membranen bei höherer Prozesstemperatur kommt es zu einem unerwünschten Molekulargewichtsabbau und somit zu einer Verschlechterung der Membraneigenschaften.

Neben der Herstellung von Hohlfasermembranen wird P 84 Pulver auch für die Herstellung von Flachmembranen verwendet (WO 2007/125367, WO 2000/06293). Hier traten die gleichen Probleme und Nachteile wie oben beschrieben auf.

In der WO 2011/009919 wird offenbart, dass die Ursache für die geringe Molmasse des P84 Typ 70 bzw. P84 HT Pulvers im Herstellprozess liegt. Es wurde gefunden, dass das Polymer bei der Überführung von der Polymerisationslösung in das Pulver, d.h. durch den Fällprozess, an Molmasse verliert. Es wurde daher vorgeschlagen das Polymer nach der Polymerisation nicht in Form eines Feststoffs, insbesondere nicht als getrockneter Feststoff, vor allem nicht als getrocknetes Pulver, zu isolieren, sondern die Polymerisationslösung direkt zur Herstellung der Membranen zu verwenden. Dieses Verfahren stellt im Vergleich zum Verfahren aus der WO 2006/092677 zu eine erhebliche Verfahrensvereinfachung dar. Ferner werden Membranen mit einem deutlich engeren PDI erhalten. Es hat sich nun jedoch gezeigt, dass auch die nach dem Verfahren aus der WO 2011/009919 hergestellten Membrane bei längerem Gebrauch bei höheren Temperaturen einem Molekulargewichtsabbau unterliegen.

Zur Stabilisierung des Molekulargewichts von Polyimidmembranen, darunter auch P84 Typ 70 bzw. P84 HT Membranen, ist es bekannt die Polymere durch Zusatz von Vernetzern zu vernetzen. Dies erfordert jedoch zusätzliche Arbeitsschritte und erhöht durch den Einsatz der Vernetzer als zusätzliche Komponente die Kosten der Membrane und die Komplexität des Prozesses.

In der WO 2006/068626 und der EP 0321569 wird vorgeschlagen zur Trennung von Flüssigkeitsgemischen Polyimidmembranen bei Temperaturen oberhalb 280 °C im Vakuum zu tempern um die Selektivität der Membranen zu steigern. Es hat sich jedoch gezeigt, dass die nach diesen Verfahren hergestellten Membranen eine gute Selektivität

aber eine zu geringe Permeanz aufwiesen, so dass sie nicht wirtschaftlich eingesetzt werden können. Ferner zeigten sich beim Nacharbeiten besagter Patente Probleme mit Verklebungen der einzelnen Hohlfasermembranen beim Tempern. Das Problem der Trennung von Gasen wird in o.g. Patentanmeldungen nicht tangiert.

Es besteht somit nach wie vor Bedarf an neuen Verfahren zur Herstellung von Polyimidmembranen, insbesondere aus P84-Modifikationen, speziell aus P84 Typ 70 bzw. P84 HT, mit hohem Molekulargewicht und verbesserter Molekulargewichts-beständigkeit.

**Aufgabe**

Aufgabe dieser Erfindung ist es daher, neuartige Polyimidmembranen sowie ein Verfahren zu deren Herstellung bereitzustellen, welche die Nachteile der Membranen und Verfahren des Standes der Technik nicht oder nur in verringertem Maße aufweisen.

Das Verfahren soll insbesondere auf Membranen aus P84-Modifikationen, speziell aus P84 Typ 70 und P84 HT, aber auch auf ähnliche Polyimide anwendbar sein.

In einer speziellen Aufgabe soll es das Verfahren ermöglichen Produkte zu erhalten, die sehr gute mechanische Eigenschaften aufweisen. Zudem sollen die Membranen eine sehr gute Selektivität mit einer sehr guten Permeanz vereinen, so dass sie eine, im Vergleich zu den Membranen des Standes der Technik, höhere Produktivität, d.h. effizientere Trennung, insbesondere von Gasgemischen, erlauben.

In einer speziellen Teilaufgabe sollen die Membranen auch nach mehrmonatiger, thermischer Belastung keinen oder nur einen sehr geringen Molekulargewichtsabbau aufweisen.

In einer weiteren speziellen Aufgabe soll das Verfahren möglichst einfach durchführbar sein und es sollen möglichst wenig polymerfremde und/oder vernetzend wirkende Substanzen in das Polymer eingebaut werden.

Noch eine weitere spezielle Aufgabe kann darin gesehen werden Polyimidmembranen, insbesondere aus P84 Typ 70 oder P84HT, zur Verfügung zu stellen, welche eine im Vergleich zum Stand der Technik erhöhte Selektivität bei der Trennung von $CH_4$ und $CO_2$ aufweisen.

Schließlich kann eine spezielle Aufgabe darin gesehen werden ein neues Verfahren bereitzustellen, welches zu Polyimidmembranen mit sehr guter Stabilität gegenüber höheren Kohlenwasserstoffen, d.h. aliphatischen oder aromatischen Kohlenwasserstoffen mit mehr als 3 Kohlenstoffatomen, insbesondere denen, die als Verunreinigungsspuren in Erdgas vorhanden sind, speziell Pentan, Hexan, Heptan, Benzol, Toluol oder Xylol, und mit einer sehr guten Plastifizierungsbeständigkeit gegenüber $CO_2$ führt.

Weitere nicht explizit genannte Aufgaben ergeben sich aus dem Gesamtzusammenhang der nachfolgenden Beschreibung, Beispiele und Ansprüche.

**Lösung des Problems**

Die Aufgaben werden gelöst durch ein Verfahren nach Anspruch 1 bzw. durch eine Polyimidmembran nach Anspruch 11. Bevorzugte Ausgestaltungsformen werden in den abhängigen Ansprüchen bzw. der nachfolgenden Beschreibung offenbart.

Die Erfinder haben herausgefunden, dass es möglich ist, durch Temperung von Polyimidmembranen bei Temperaturen im Bereich von 280 °C bis zum Glasspunkt des Polyimids in einer Gasatmosphäre mit einem Sauerstoffgehalt von kleiner 0,5 Vol. %

Membrane zu erhalten, die eine sehr hohe Gas-Selektivität und zudem eine sehr gute Permeanz aufweisen. Es hat sich insbesondere gezeigt, dass diese

Temperungsbedingungen im Vergleich zur Temperung im Vakuum, wie z. B. in der WO 2006/068626 vorgeschlagen, zu Membranen mit einer deutlich höheren Permeanz bei vergleichbarer Selektivität und somit einer deutlich höheren Produktivität führen.

Mit dem erfindungsgemäßen Verfahren wurden Polyimidmembranen erhalten, die je nach Temperatur und Zeit eine frei einstellbare DMF Löslichkeit aufweisen. Die derart behandelten Membrane zeigen auch bei mehrmonatiger thermischer Belastung keinen bzw. im Vergleich zum Stand der Technik nur einen stark verringerten Molekulargewichtsabbau.

Hervorzuheben ist, dass diese Verringerung des Molekulargewichtsabbaus erfindungsgemäß möglich ist ohne polymerfremde, in das Polymer eingebaute, Substanzen, wie z. B. Vernetzer, zu verwenden. Es wurde somit ein sehr einfaches und kostengünstiges Verfahren gefunden und die Recyclingmöglichkeiten der Membran verbessert, da die Sortenreinheit erhöht wurde.

Ferner war es überraschend, dass durch den erfindungsgemäßen Prozess eine sehr gute Plastifizierungsbeständigkeit gegenüber $CO_2$ und Chemikalienbeständigkeit der Membranen erreicht wurde, die zum Teil sogar besser ist als im Stand der Technik.

Die beschriebene Kombination an positiven Eigenschaften der erfindungsgemäßen Membranen war vor dem

Hintergrund des Standes der Technik nicht zu erwarten. Zum einen betreffen die bereits diskutierten WO 2006/068626 und EP 0321569 ausschließlich Membranen zur flüssig/flüssig Trennung, zum anderen lehrt die die WO 2006/092677, die Gasseparation betrifft, auf Seite 17, 1. Absatz, dass "exzessives Tempern von P84 und P84HT zu unerwünschten Kettenbrüchen führt und somit vermieden werden muss". Gemäß Seite 16, Zeile 18 in Kombination mit Seite 17, Zeile 3, lehrt die WO 2006/092677 dass eine Temperungstemperatur von mehr als 250 °C nicht geeignet ist.

Nicht nur, dass im Stand der Technik zu Gasseparationsmembranen davon abgeraten wird bei Temperaturen oberhalb von 250 °C zu tempern, der Stand der Technik WO 2006/092677 und WO 2011/009919 legen nahe Vorstufen im Membranherstellungsprozess und nicht, wie in der vorliegenden Erfindung, die fertige Membran zu tempern. Die Ergebnisse der Erfinder waren somit vor dem Hintergrund des Standes der Technik absolut nicht vorhersehbar und nicht naheliegend.

## Gegenstand der Erfindung

Gegenstand der vorliegenden Erfindung sind somit das in der nachfolgenden Beschreibung, den Beispielen und den Ansprüchen offenbarte Verfahren und die dort offenbarten Membranen.

## Detaillierte Beschreibung der Erfindung

Bevor die Gegenstände der Erfindung nachfolgend im Detail beschrieben werden, werden zunächst einige wichtige Begriffe definiert.

Die Begriffe "P84" und "P84 Typ 70" werden im Rahmen der vorliegenden Erfindung synonym verwendet und unterscheiden sich in jedem Fall von P84HT, welches - wenn gemeint - immer explizit als solches genannt wird.

Als "polymerfremde, vernetzend wirkende Substanzen" werden im Rahmen der vorliegenden Erfindung Substanzen bezeichnet, die mittels kovalenter Bindungen in die Polymere eingebaut oder an die Polymerkette angebunden werden und die sich unterscheiden von den zur Herstellung der Polymere eingesetzten Monomeren entsprechen bzw. den zur Regelung der Kettenlänge eingesetzten Substanzen bzw. den bei der Herstellung der erfindungsgemäßen verwendeten Polymere oder den aus den bereits gebildeten Polymeren im Laufe des erfindungsgemäßen Verfahrens, z. B. als Neben- oder Zwischenprodukte, gebildeten Substanzen.. Beispiele dafür sind Vernetzer, die im Stand der Technik eingesetzt werden um temperaturstabile Membrane zu erhalten.

Unter "die Membran umgebende Gasatmosphäre" wird im Rahmen der vorliegenden Erfindung verstanden, dass die Membran während der Temperung von einem in die Apparatur zugeführten Gas oder Gasgemisch oder Gasstrom oder Strom eines Gasgemisches mit einem Sauerstoffgehalt von weniger als 5 Vol. %, bevorzugt mit einem Druck von mindestens 5 mbar, besonders bevorzugt mindestens 10 mbar, ganz besonders bevorzugt mindestens 20 mbar; speziell bevorzugt mindestens 30 mbar, ganz speziell bevorzugt mindestens 100 mbar, insbesondere bevorzugt mindestens 500 mbar und am meisten bevorzugt mindestens 1000 mbar absolut, umgeben wird. Das Gas oder Gasgemisch oder der Gasstrom oder der Strom eines Gasgemisches kann vor und/oder während der Temperung in die Apparatur eingeführt werden. Diese Atmosphäre unterscheidet sich somit von einer Atmosphäre, die erzeugt wird alleine durch Evakuieren von Luft aus der Apparatur.

Das erfindungsgemäße Verfahren zur Herstellung von Polyimidmembranen umfasst die folgenden Schritte:

a) Herstellung einer Polyimidmembran aus

mindestens einem Dianhydrid, ausgewählt aus der Gruppe bestehend aus 3,4,3'4'-Benzophenontetra-carbonsäuredianhydrid, 1,2,4,5-Benzoltetracarbonsäuredianhydrid, 3,4,3'4'-Biphenyltetracarbon-säuredianhydrid, Oxydiphthalsäuredianhydrid, Sulfonyldiphthalsäuredianhydrid, 1,1,1,3,3,3-Hexafluor-2,2-propylidendiphthalsäuredianhydrid

und

mindestens einem Diisocyanat, ausgewählt aus der Gruppe bestehend aus Toluol-2,4-diisocyanat, Toluol-2,6-diisocyanat, 4,4'-Methylendiphenyl-diisocyanat, 2,4,6- Trimethyl-1,3-phenylendiiso-cyanat, 2,3,4,5-Tetramethyl-1,4-phenylendi-isocyanat

b) Tempern der Membran aus Schritt a) bei 280 bis zum Glasstemperatur, ca. 360-370°C, des Polymers

und ist dadurch gekennzeichnet,
dass die Membran während der Temperung von einer Gasatmosphäre mit einem Sauerstoffgehalt von kleiner gleich 0,5 Vol. %, bevorzugt einem Inertgas, besonders bevorzugt Stickstoff, mit entsprechend niedrigem Sauerstoffgehalt,

umgeben ist bzw. von einem entsprechenden Gasstrom umspült wird.

Bevorzugt handelt es sich bei dem Polyimid in Schritt a) um ein Polyimid mit folgender Zusammensetzung:

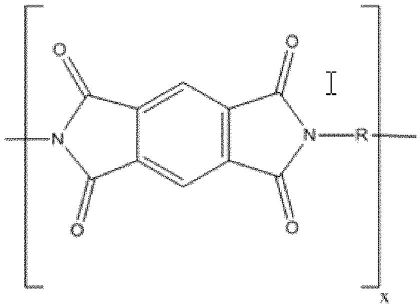

(A)

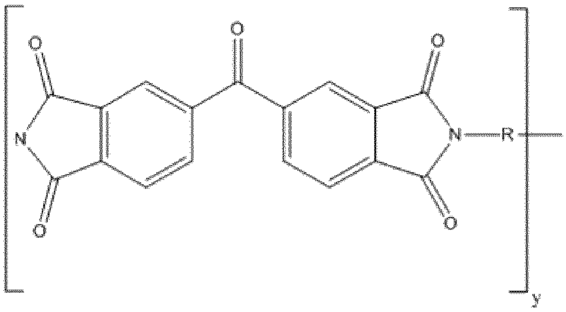

(B)

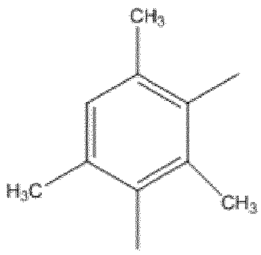

(L1)

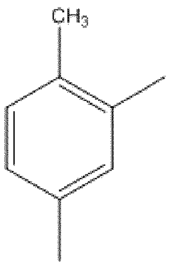

(L2)

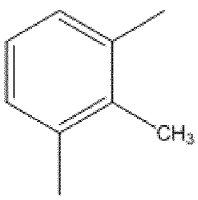

(L3)

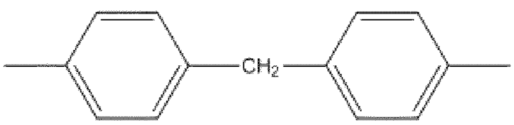

(L4)

Mit $0 \leq x \leq 0,5$ und $1 \geq y \geq 0,5$ und R entspricht einem oder mehreren, gleichen oder unterschiedlichen Resten, ausgewählt aus der Gruppe bestehend aus den Resten L1, L2, L3 und L4.

Ganz besonders bevorzugt handelt es sich um ein Polymer mit X = 0, Y = 1 und R bestehend zu 64 mol % aus L2, zu 16 mol % aus L3 und zu 20 mol % aus L4. Dieses Polymer ist unter dem Namen P84 oder P84 Typ 70 am Markt erhältlich und hat folgende CAS-Nummer: 9046-51-9. Speziell bevorzugt wird in Stufe a) ein Polymer mit der Zusammensetzung x = 0,4, y = 0,6 und R bestehend zu 80 mol % aus L2, zu 20 mol % aus L3. Dieses Polymer ist unter dem Namen P84HT oder P84 HT 325 am Markt erhältlich und hat folgende CAS-Nummer: 134119-41-8.

Die Bedingungen der Temperung können je nach gewünschter Eigenschaft der Membranen variiert werden. Ab einer Temperatur von 280 °C erhält man Membranen mit einer sehr guten Gas-Selektivität. Bei Temperaturen von mehr als 280 °C bei P84 Typ 70 und oberhalb von 300 °C bei P84 HT wird zudem das Molekulargewicht stabilisiert, so dass bei diesen Temperaturen die Molekulargewichtsstabilität eingestellt werden kann. Neben der Temperatur kann auch durch die Dauer der Temperung Einfluss auf die Selektivität und die Molekulargewichtsbeständigkeit genommen werden. Ohne an eine bestimmte Theorie gebunden zu sein, sind die Erfinder der Ansicht, dass durch die Temperung der getrockneten Membran eine Verdichtung der Membranstruktur, speziell an die Oberfläche wo sich die Trennschicht befindet erfolgt. Die Selektivität ist lediglich durch den intrinsischen Wert des Polymers begrenzt.

Anhand der weiter unten aufgeführten Beispiele ist für einen Fachmann ersichtlich welche Variation welchen Einfluss auf die Produkteigenschaften hat und wie er welche Eigenschaft einstellen kann.

Bevorzugt wird die Temperung bei Temperaturen von 280 bis zum 370°C, besonders bevorzugt 285 bis 360 °C, ganz besonders bevorzugt 290 bis 350 °C, speziell bevorzugt bei 300 bis 340°C, ganz speziell bevorzugt bei 305 bis 330°C und insbesondere bevorzugt bei 310 bis 320°C durchgeführt.

Die Dauer der Temperung - ab dem Zeitpunkt an dem die Zieltemperatur für die Temperung erreicht ist - liegt bevorzugt bei 15 bis 300 min, besonders bevorzugt bei 30 bis 240 min, ganz besonders bevorzugt bei 30 bis 90 und speziell bevorzugt bei 60 bis 90 min oder 45 bis 75 min.

Besonders bevorzugte Kombinationen aus Temperatur und Dauer für P84 Typ 70 sind 280 bis 310 °C, insbesondere 285 bis 295 °C und 30 bis 90 min, insbesondere 45 bis 75 min.

Besonders bevorzugte Kombinationen aus Temperatur und Dauer für P84 HT sind 305 bis 330 °C, insbesondere 310 bis 320 °C, und 30 bis 90 min, insbesondere 45 bis 75 min.

Die Aufheizrate zur Erreichung der Tempertemperatur wird bevorzugt ab etwa 250°C im Bereich von 0,1 bis 10 °C/min, besonders bevorzugt 1 bis 5 °C/min und ganz besonders bevorzugt von 1 bis 2 °C/min gewählt, damit die Aufheizung gleichmäßig überall im Membran Bündel stattfindet und damit zur gleichen Zeit die End Temperatur erreicht wird. Insbesondere bei der gleichzeitigen Temperung großer Mengen von Fasern ist eine langsamere Aufheizrate von Vorteil um eine gleichmäßige Aufheizung der Fasern sicherzustellen.

Die Temperatur der die Membran in einem Abstand von bis zu 10 cm, bevorzugt 2 bis 10 cm, umgebenden Atmosphäre wird mit 3 oder mehr Sensoren, bevorzugt Thermoelementen, gemessen. Der vorgegebene Abstand bezieht sich auf den Abstand zur äußeren Oberfläche der Membran, wenn nur eine Membran getempert wird. Werden mehrere Membranen gleichzeitig getempert, z. B. ein Membranbündel oder eine Stapelanordnung von Membranen, so bezieht sich der Abstand auf die äußere Oberfläche einer ganz außen liegenden Membran, d.h. den Abstand zur äußeren Oberfläche des Membranbündels oder einer sonstigen Membrananordnung.

Die Erfinder haben herausgefunden, dass die mechanischen Eigenschaften der Membranen und insbesondere deren Produktivität besonders gut sind, wenn der Sauerstoffgehalt der die Membran in einem Abstand von bis zu 10 cm, bevorzugt 2 bis 10 cm, umgebenden Atmosphäre während der Temperung einen bestimmten Maximalwert nicht überschreitet. Bevorzugt findet die Temperung daher bei einem Sauerstoffgehalt von kleiner gleich 0,5 Vol. %, besonders bevorzugt bei kleiner gleich 0,25 Vol. %, ganz besonders bevorzugt bei kleiner gleich 0,1 Vol. % und speziell bevorzugt bei kleiner gleich 0,01 Vol. % statt. Es hat sich weiterhin gezeigt, dass der Sauerstoffgehalt alleine nicht ausschlaggebend ist, sondern dass besonders gute Ergebnisse erzielt werden, wenn man statt im Vakuum, so wie im Stand der Technik, die Membranen in einer Gasatmosphäre oder einem Gasstrom mit entsprechend niedrigem Sauerstoffgehalt tempert. Ohne an eine bestimmte Theorie gebunden zu sein deuten die experimentellen Ergebnisse darauf hin, dass durch die Gasatmosphäre bzw. den Gasstrom eine gleichmäßige Temperaturverteilung im zu tempernden Membranbündel erreicht und somit alle Membranen gleichmäßig getempert werden (siehe hierzu auch Vergleichsbeispiel 2 unten).

Die Membranen werden daher während der Temperung und bevorzugt zumindest in der ersten Phase des Abkühlens, besonders bevorzugt auch während des Aufheizens und/oder bis zum Ende des Abkühlens, von einer Atmosphäre mit entsprechend niedrigem Sauerstoffgehalt umgeben. Ganz besonders bevorzugt wird die Membran während der o.g. Phasen von einem Gas oder Gasgemisch oder Gasstrom oder Strom eines Gasgemisches, speziell bevorzugt mindestens eines Inertgases, wie z. B. eines Edelgases oder Stickstoff oder Schwefelhexafluoride und ganz speziell bevorzugt Stickstoff, mit dem oben genannten, niedrigem Sauerstoffgehalt umspült. Am meisten bevorzugt wird ein entsprechender Gasstrom verwendet. Während des Abkühlens, d.h. sobald die maximale Temperungstemperatur dauerhaft unterschritten wird, kann auch ein Vakuum angelegt werden.

Besonders bevorzugt ist, dass die, die Membran in einem Abstand von bis zu 10 cm, bevorzugt 2 bis 10 cm,

umgebende, Atmosphäre, nach Beginn der Abkühlung bis zu Temperaturen von 200 bis 275°C, besonders bevorzugt 200 bis 270 °C, ganz besonders bevorzugt 200 bis 250°C und speziell bevorzugt 200 bis 220°C der oben beschriebenen Gasatmosphäre entspricht bzw. ein Vakuum gezogen wird. Bei tieferen Temperaturen, insbesondere unterhalb 200 °C ist die Reaktivität der Membranen derart gering, dass ein Kontakt mit einer sauerstoffreicheren Atmosphäre in der Regel keinen Schaden mehr anrichtet. Ob die Temperung erfolgreich verlief, d.h. keine unerwünschte Oxidation stattgefunden hat kann unter anderem auch dadurch festgestellt werden, dass keine Verfärbung der Membran (leicht orange) sichtbar ist. Eine unerwünschte Oxidation kann auch mittels FT-IR festgestellt werden.

Die Abkühlung der Membranen nach der Temperung kann "passiv" erfolgen, d.h. durch Abschalten der Wärmequelle. Besonders bevorzugt erfolgt jedoch eine "aktive" Abkühlung der Membranen nach beendeter Temperung, z. B. durch Spülen des Ofens oder in Kontakt bringen der Membran mit einem entsprechend temperierten Inertgas mit dem weiter unten spezifizierten $O_2$-Gehalt. Alternativ aber ebenfalls bevorzugt erfolgt die Kühlung mittels eines Wärmetauschers bzw. einem Kühlkreislauf. Weitere technische Abwandlungen um entsprechende Kühlungen zu bewirken sind dem Fachmann bekannt und von der vorliegenden Erfindung umfasst. Die aktive Abkühlung erhöht die Raum/Zeit-Ausbeute und vermindert das Risiko, dass es während der Abkühlung doch noch zu einer unerwünschten Verschlechterung der Membraneigenschaften kommt.

Der erfindungsgemäße Schritt a) kann im Prinzip nach jedem beliebigen Verfahren zur Herstellung der Polyimidmembranen durchgeführt werden. Besonders bevorzugt sind jedoch Verfahren, die zu Membranen führen welche eine nanoporöse Struktur aufweisen. Werden als Ausgangsmaterial für Schritt b) Membranen hergestellt, die bereits eine recht dicke Trennschicht oder eine dichte Struktur aufweisen, so wird durch die Temperung zwar deren Selektivität nochmals verbessert und der Molekulargewichtsabbau verhindert, die Temperung führt aber auch dazu, dass die Membranen noch weiter verdichtet werden und somit eine sehr dicke Trennschicht erhalten wird. Dies wiederum bedeutet, dass die Membranen zwar eine sehr gute Selektivität aber eine schlechte Permeanz und somit schlechte Produktivität aufweisen. Die Effektivität des erfindungsgemäßen Verfahrens kann somit noch einmal gesteigert werden, wenn in Schritt a) eine Membran hergestellt wird, die durch eine entsprechend hohe Permeanz gekennzeichnet ist. Die Permeanz ist ein Maß für den Gasfluss und somit ein Indikator für die Struktur der Membran. Im erfindungsgemäßen Verfahren werden somit bevorzugt in Schritt a) Membranen mit einer Permeanz für $O_2$ von größer gleich 25 GPU, bevorzugt größer gleich 50 GPU, besonders bevorzugt 100 bis 2000 GPU, ganz besonders bevorzugt von 200 bis 1500 GPU, speziell bevorzugt von 300 bis 1000 GPU und ganz speziell bevorzugt von 400 bis 800 GPU hergestellt. Entsprechende Membranen können bevorzugt nach den nachfolgen beschriebenen Verfahren hergestellt werden.

In einer ersten bevorzugten Ausführungsform umfasst der Membranherstellprozess in Schritt

a) nachfolgende Teilschritte:

a1) Polymerisation
a2) Herstellung der Gießlösung
a3) Membranherstellung

<u>a1) Polymerisation</u>

Die Herstellung der erfindungsgemäß verwendeten Polyimide erfolgt nach einer Polykondensation mindestens eines der o. g. aromatischen Tetracarbonsäureanhydride mit mindestens einem der o.g. aromatischen Diisocyanate unter Freisetzung von Kohlendioxid.

Die Polymerisation erfolgt bevorzugt in einem aprotisch dipolaren Lösungsmittel. Es werden vorzugsweise aber nicht ausschließlich Dimethylformamid, Dimethylacetamid, N-Methylpyrrolidon, N-Ethylpyrolidon und Sulfolan einzeln oder in Mischungen verwendet.

Hierbei wird bevorzugt das aromatische Dianhydrid oder Gemische von aromatischen Dianhydriden in Konzentrationen von 10 Gew.-% bis 40 Gew.-%, vorzugsweise zwischen 18 Gew.-% und 32% Gew.-% und besonders bevorzugt zwischen 22 Gew.-% und 28% Gew.-% in einem aprotisch dipolaren Lösungsmittel gelöst und auf 50 °C bis 150°C, vorzugsweise 70°C bis 120°C und besonders bevorzugt auf 80 °C bis 100°C erhitzt. Zu dieser Lösung werden 0,01% Gew.-% bis 5 Gew.-%, vorzugsweise 0,05 Gew.-% bis 1 Gew.-%, und besonders vorzugsweise 0,1 Gew.-% bis 0,3% Gew.-% eines basischen Katalysators gegeben. Als Katalysator kommen in Frage:

- Alkali- und Erdalkalihydroxide, -methylate, -ethanolate, -carbonate und -phosphate wie zum Beispiel aber nicht ausschließlich Natriumhydroxid, Kaliumhydroxid, Natriummethylat, Kaliummethylat, Natriumethylat, Kaliumethylat, Natriumcarbonat, Natriumhydrogencarbonat, Kaliumcarbonat, Kaliumhydrogencarbonat, Kaliumphosphat, Kaliumyhdrohenphosphat, Kaliumdihydrogenphosphat
- Tertiäre Amine wie zum Beispiel aber nicht ausschließlich: Trimethylamin, Triethylamin, Tripropylamin, Diazabicycloundecan, Diazabicyclooctan, Dimethylaminopyridin,

Das Diisocyanat wird dann bevorzugt über einen Zeitraum von 1 bis 25 Stunden, besonders bevorzugt 3 bis 15 Stunden und ganz besonders bevorzugt 5 bis 10 Stunden zugegeben.

Es entsteht bei den erfindungsgemäß verwendeten Polymeren auf diese Weise eine klare goldgelbe bis dunkelbraune Polymerlösung mit einer Viskosität zwischen 1 und 300 Pa.s, vorzugsweise 20 bis 150 Pa.s und besonders vorzugsweise 40 bis 90 Pa.s. Die Molmassen Mp liegen bevorzugt bei größer als 100 000 $g.mol^{-1}$.

Nach den obigen Verfahrensschritten fällt das erfindungsgemäße Polyimidpolymer gelöst in einem aprotisch dipolaren Lösungsmittel an. Es sind keine störenden Begleitstoffe oder Nebenprodukte in der Polymerlösung. Die Viskosität ist sehr hoch und geeignet zur Herstellung von Membranen. Aus diesem Grund ist es auch ökonomisch vorteilhaft, das Polymer nicht auszufällen und dann wieder im selben Lösungsmittel aufzulösen. Die Lösungen werden daher bevorzugt ohne Isolierung des Polymers und bevorzugt auch ohne sonstige weitere Behandlung direkt zur Herstellung der Gießlösung eingesetzt.

a2) Herstellung der Gießlösunq

Die Polymerlösungen, die aus der Polykondensation erhalten werden, haben bevorzugt einen Feststoffgehalt zwischen 15 Gew.-% und 35 Gew.-%, besonders bevorzugt zwischen 22 Gew.-% und 30 Gew.-% und ganz besonders bevorzugt zwischen 22 Gew.-% und 29 Gew.-% und können ohne weitere Behandlung zur Herstellung der Gießlösung verwendet werden. Je höher der Feststoffgehalt ist, desto geringer ist die Permeanz der Membran. Da im Rahmen der vorliegenden Erfindung in Schritt a) besonders bevorzugt Membranen mit einer hohen Permeanz hergestellt werden ist es besonders bevorzugt mit Feststoffgehalten von max. 29 Gew. % zu arbeiten.

Die erfindungsgemäßen Gießlösungen zeichnen sich durch folgende Eigenschaften aus:

- Sie weisen eine genügend hohe Viskosität zur Herstellung von Hohlfasermembranen auf
- Sie können Additive enthalten , die die Bildung von großen Hohlräumen (Macrovoids) in den Membranen verhindern
- Sie können flüchtige Lösungsmittel zur Herstellung einer Oberfläche mit der gewünschten Porengröße enthalten

Die Viskosität der Gießlösung ist dann ideal, wenn sie dem sogenannten "Entanglement"-Punkt im Verlauf der Viskosität in Abhängigkeit des Feststoffes entspricht. Dieser Punkt ist jener Punkt wo die Abhängigkeit der Viskosität vom Feststoff vom linearen in ein exponentielles Verhalten übergeht. Dieser Punkt ist sehr stark von der Molmasse abhängig. Je höher die Molmasse ist, umso niedriger ist der Feststoffgehalt, bei dem Entanglement auftritt.

Im Hinblick auf die Viskosität, die Molmassen und die Molmassenverteilung unterscheiden sich die nach diesem Verfahren erhältlichen Gießlösungen deutlich von Gießlösungen, die aus Pulvern oder Granulaten desselben Polymers hergestellt wurden. Diese bevorzugte Ausführungsform hat somit den Vorteil, dass Gießlösungen erhältlich sind, die eine hohe Viskosität in Kombination mit einer hohen Molmasse und einer engen Molmassenverteilung des Polyimids aufweisen. Mit dem Verfahren gemäß dieser ersten bevorzugten Ausführungsform können somit Membranen hergestellt werden, welche hervorragende mechanische Eigenschaften aufweisen.

Bei der Herstellung der Gießlösung können auch Additive zugesetzt werden. Durch verschiedene Mengen an Additiven ergeben sich unterschiedliche Feststoffgehalte, die dann den Entanglementpunkt verschieben würden. Hier kann durch eine Anpassung der Molmasse in der Polymerisation dieser Entanglementpunkt wieder verschoben werden.

Wenn die Zusammensetzung der Gießlösung sich sehr weit wegbewegt von der Konzentration, bei der Phasenseparation stattfindet, so wird der Gradient zwischen Lösungsmittel und Nichtlösungsmittel bei der Membranherstellung durch Phaseninversion sehr groß, und man erhält große Hohlräume in den Membranen. Diese auch Macrovoids genannten Hohlräume verursachen eine geringere Druckstabilität der Membranen in der Anwendung und limitieren deren Einsatz zum Beispiel im Einsatz bei der Erdgasaufreinigung. Man kann die Bildung der Macrovoids durch Zugabe von Nichtlösungsmitteln verhindern. Hierzu kommen folgende mit Wasser mischbare Lösungsmittel oder Mischungen daraus in Frage.

Die Liste ist nur als Beispielliste zu sehen, der geübte Kenner findet auch noch andere Lösungsmittel.

- Alkohole wie zum Beispiel Methanol, Ethanol, Isopropanol, Propanol, Butanol, Butandiol, Glycerin,
- Wasser,
- Ketone wie zum Beispiel Aceton oder Butanon

Zur Herstellung einer definierten Oberfläche der Membran kann man im Prinzip mehrere Verfahren benutzen. Neben der Delayed Demixing Methode führt auch eine Abdampfung von flüchtigen Colösungsmitteln zu sehr dünnen selektiven Schichten sowohl im Bereich Gastrennmembran wie auch im Bereich Nano- und Ultrafiltrationsmembran. Der Grad der Abdampfung und damit die Porengröße wird durch die Art des flüchtigen Lösungsmittels, dessen Konzentration, der Abdampfzeit, der Temperatur der Gießlösung, der Menge und Temperatur des umgebenden Gases bei der Abdampfstrecke beeinflusst.

Als flüchtige Lösungsmittel kommen folgende Lösungsmittel in Frage. Diese sollten mit Wasser mischbar sein, wie beispielsweise Aceton, Tetrahydrofuran, Methanol, Ethanol, Propanol, Isopropanol, Dioxan, Diethylether.

Die Herstellung der Gießlösung erfolgt bevorzugt durch Zugabe der Additive durch Zudosieren der Mischung der Additive oder getrennt voneinander hintereinander. Dabei werden die Additive bevorzugt zur Mischung langsam unter Rühren zudosiert. Die Zudosierung erfolgt bevorzugt zwischen 10 min und 3 Stunden, besonders bevorzugt zwischen 30 min und 2 Stunden. Durch die Zugabe der Colösungsmittel erfolgt teilweise Ausfällung des Polyimides an der Eintropfstelle. Die Feststoffe lösen sich aber nach wenigen Minuten wieder rückstandsfrei auf. Die klare Lösung wird dann bevorzugt noch durch ein Stahlmaschensieb, besonders bevorzugt ca. 15 μm Maschenweite, filtriert, um störende Begleitstoffe zu entfernen, die zu Fehlern in der Membranoberfläche führen würden.

Nach der Filtration wird die Lösung bevorzugt entgast und von Luftblasen befreit. Dies erfolgt in der Regel durch Anlegen eines Unterdrucks mit Hilfe einer Vakuumpumpe.

a3) Herstellung der Hohlfasern

Die entgaste, filtrierte und gegebenenfalls mit Additiven versetzte Gießlösung wird vorzugsweise auf 20 bis 100°C, besonders vorzugsweise auf 30 bis 70°C thermostatisiert. Die Lösung wird dann mit z. B. einer Zahnradpumpe durch den äußeren Teil einer Zweistoffdüse gepumpt. Der Außendurchmesser der Zweistoffdüse beträgt bevorzugt von 500 bis 800 μm, besonders bevorzugt von 550 bis 750 μm, der Innendurchmesser beträgt bevorzugt von 200 bis 400 μm, besonders bevorzugt von 250 bis 350 μm, die Pumpleistung beträgt bevorzugt zwischen 0,1 und 13,5 ml/min. Im inneren Teil der Zweistoffdüse wird ein Flüssigkeitsgemisch aus Wasser und einem oder einem Gemisch mehrerer aprotisch dipolarer Lösungsmittel (Bore-Lösung) gepumpt.

Als aprotisch dipolares Lösungsmittel kommen unter anderem aber nicht ausschließlich Dimethylformamid, Dimethylacetamid, N-Methylpyrrolidon, N-Ethylpyrrolidon, Sulfolan oder Dimethylsulfoxid oder Kombinationen davon in Frage. Die Zusammensetzung zwischen Lösungsmittel und Wasser in der Bore-Lösung beträgt bevorzugt zwischen 10 Gew.-% und 95 Gew.-% Lösungsmittel und 90 Gew.-% und 5 Gew.-% Wasser, besonders bevorzugt zwischen 30 Gew.-% und 90 Gew.-% Lösungsmittel und 70 Gew.-% und 10 Gew.-% Wasser und ganz besonders bevorzugt zwischen 50 Gew.-% und 80 Gew.-% Lösungsmittel und 50 Gew.-% und 20 Gew.-% Wasser. Die Pumpleistung beträgt besonders bevorzugt zwischen 1 ml/min und 10 ml/min.

Der bevorzugte Abstand der Spinndüse von einem Fällbad aus Wasser, in das die Hohlfaser gesponnen wird und durch Ausfällen des Polymeren eine integral asymmetrische Hohlfasermembran geformt wird beträgt 1 cm bis 1 Meter, bevorzugt 5 bis 60 cm. Durch Verdampfung des Lösungsmittels an der Außenseite der Membran verdichtet sich die Schicht und formt damit beim Ausfällen im Fällbad die Trennschicht. Die Dicke der Trennschicht lässt sich einstellen durch den Abstand der Spinndüse vom Fällbad und durch die Atmosphäre der Membran auf ihrem Weg von der Spinndüse zum Fällbad. Je nach gewünschter Eigenschaft der Membran kann ein Fachmann den richtigen Abstand durch einfache Versuche ermitteln.

Wie bereits erwähnt ist es im erfindungsgemäßen Verfahren besonders bevorzugt, dass Membranen mit einer hohen Gasdurchlässigkeit, d.h. Permeanz, in Schritt a) erhalten werden. Dafür sollte die Membran keine zu dicke und/oder zu dichte Trennschicht vor der Temperung aufweisen. Dies wird erfindungsgemäß besonders bevorzugt dadurch erreicht, dass beim Spinnprozess der Hohlfaden vor dem Eintritt in das Fällbad mit einem trockenen, thermostatisierten Gas- oder Luftstrom umspült wird bzw. durch eine entsprechende Gasoder Luftatmosphäre geleitet wird. Besonders bevorzugt wird die Membran durch einen Gasoder Luftstrom geleitet. Trocken bedeutet, dass der Gas- oder Luftstrom in der Lage ist Wasser aufzunehmen. Bevorzugt weist der Luft- oder Gasstrom daher einen Wassergehalt von 0 bis 90 % rel. Feuchte, bevorzugt von 0 bis 50 % rel. Feuchte und ganz besonders bevorzugt von 0 bis 30 % rel. Feuchte bei der jeweiligen Luft- bzw. Gastemperatur.

Ganz besonders bevorzugt tritt die Hohlfaser nach der Düse in einen Schacht (eine Röhre) ein, die mit einem trockenen thermostatisierten Gas durchflutet ist. Als Gase kommen in Frage: Stickstoff, Luft, Argon, Helium, Kohlendioxid, Methan oder andere technische inerte Gase. Die Temperatur der Gase wird über einen Wärmetauscher eingestellt und beträgt vorzugsweise zwischen 20 und 250°C, besonders vorzugsweise zwischen 25 und 120°C und ganz besonders vorzugsweise zwischen 30 und 80 °C.

Die Gasgeschwindigkeit in der Röhre beträgt vorzugsweise zwischen 0,1 und 10 m/min, besonders vorzugsweise zwischen 0,3 und 5 m/min, ganz besonders vorzugsweise zwischen 0,5 und 3 m/min und speziell bevorzugt zwischen 0,5 und 2 m/min. Die Länge der Röhre beträgt vorzugsweise zwischen 1 cm und einem Meter, besonders bevorzugt zwischen 2 und 50 cm, ganz besonders bevorzugt zwischen 5 und 40 cm und speziell bevorzugt zwischen 5 und 30 cm. Die Schachtlänge, die Gasgeschwindigkeit und die Temperatur haben Einfluss auf die Dicke der trennaktiven Schicht der Membran. Um in Schritt a) des erfindungsgemäßen Verfahrens eine Membran mit einer hohen Permeanz und geringen Dicke der trennaktiven Schicht zu erhalten sollten oben genannte Bereiche vorzugsweise eingehalten

werden.

Der so konditionierte Faden taucht dann in ein Fällbad ein, das die Polymermasse koagulieren lässt und so die Membran formt. Die Temperatur des Bades beträgt vorzugweise zwischen 1 und 80°C, besonders bevorzugt zwischen 20 und 70 °C und ganz besonders bevorzugt zwischen 40 und 65 °C.

Die Konzentration an aprotisch dipolaren und anderen Lösungsmitteln wie zum Beispiel aber nicht ausschließlich Dimethylformamid, Dimethylacetamid, N-Methylpyrrolidon, N-Ethylpyrrolidon, Sulfolan, Dimethylsulfoxid, Tetrahydrofuran, Dioxan, Isopropanol, Ethanol oder Glycerin im Fällbad beträgt bevorzugt zwischen 0,01 Gew.-% und 20 Gew.-%, besonders bevorzugt zwischen 0,1 Gew.-% und 10 Gew.-% und ganz besonders bevorzugt zwischen 0,2 Gew.-% und 1 Gew.-%, der Rest ist Wasser. Es ist ebenfalls bevorzugt reines Wasser im Wasserbad zu verwenden.

Die Abzugsgeschwindigkeit der Hohlfasern liegt bevorzugt zwischen 2 und 100 m/min, besonders bevorzugt zwischen 10 und 80 m/min und ganz besonders bevorzugt zwischen 30 und 70 m/min. Es hat sich gezeigt hat, dass eine zu hohe Abzugsgeschwindigkeit zu einem Verlust an Permeanz führt. Dennoch ist es im erfindungsgemäß bevorzugten Verfahren vorzugsweise Möglich mit einer hohen Abzugsgeschwindigkeit zu arbeiten und somit die Produktivität im Vergleich zum Stand der Technik zu erhöhen.

Die Fasern werden nach dem Fällbad bevorzugt gewaschen, bis der Restlösemittelgehalt kleiner 1 Gew. %, bevorzugt kleiner gleich 0,5 Gew. % ist. Hierzu können verschiedene Waschtechniken abgewendet werden. Bevorzugt wird in einem kontinuierlichen Prozess gearbeitet, die Fasern durch ein oder mehrere hintereinander angeordnete Wasserbäder geführt. Besonders bevorzugt sind die Wasserbäder auf 40 bis 90 °C, bevorzugt 50 bis 80°C geheizt um eine effektivere Wäsche zu erreichen.

Es ist aber auch möglich, die Fasern nach dem Fällbad auf eine Spule aufzuwickeln und offline in Wasser zu waschen. Die Wäsche kann bei jeder Temperatur erfolgen. Vorzugsweise wird jedoch wie oben beschrieben bei höheren Temperaturen gewaschen. Bevorzugt wird das Wasser in Querstrom entlang die Fasern geleitet, d.h. es wird von der Innenseite der Spule nach außen gedrückt.

Nachfolgend erfolgt bevorzugt ein Lösungsmittelaustausch, besonders bevorzugt in Isopropanol und/oder Hexan, womit Wasser und DMF entfernt werden. Der Lösungsmittelaustausch kann wie auch die Wäsche kontinuierlich (online) oder offline erfolgen. Zum online Lösungsmittelaustausch werden die Fasern, bevorzugt nach dem/den Waschbad/Waschbädern, durch ein oder mehrere Lösungsmittelbäder geführt.

Die Fasern werden dann vorzugsweise bei einer Temperatur im Bereich von Raumtemperatur und 150°C, besonders bevorzugt zwischen 50 und 100°C getrocknet wobei Isopropanol und Hexan abgezogen werden. Der Gesamt-Wasser- und/oder RestLösemittelgehalt liegt nach der Trocknung bei 0 bis 5 Gew. %, bevorzugt <3 Gew. % und speziell bevorzugt 0.1 bis 3 Gew.%, und bestehend vorzugsweise aus den Anteilen von Wasser, Isopropanol und Hexan. Es hat sich gezeigt, dass ein geringer Restlösungsmittel und -wassergehalt zusätzliche Vorteile für die Temperung bringt. Wie in Vergleichsbeispiel 4 gezeigt, führt ein zu hoher Restgehalt an Wasser und Lösungsmittel bei der Temperung ganzer Membranbündel dazu, dass die Membranen untereinander verkleben. Somit können bei einem zu hohen Restgehalt keine ganzen Membranbündel getempert werden. Stattdessen müsste ein zusätzlicher Aufwand getrieben werden, um die Membranen einzeln zu tempern. Dies birgt zudem die Gefahr, dass es zu Inhomogenitäten im Membranbündel durch Schwankungen bei der Temperung einzelner Membranen kommt. Wie in Vergleichsbeispiel 4 gezeigt ist die kurze Trocknung in der EP 0321569 völlig unzureichend und das Membranbündel verklebte.

Ferner kann zu viel Wasser zu einer Hydrolyse und damit einem Kettenbruch und somit zu einer mechanisch instabilen Membran führen. Obwohl ein Teil des Wassers und des Lösungsmittels während der Temperung verdampfen wird, hat es sich herausgestellt, dass es vorteilhaft ist, wenn der Maximalgehalt vor Beginn der Temperung bei unter 5 Gew.% bevorzugt bei unter 3 Gew. % liegt.

Im erfindungsgemäßen Verfahren ist es vorzugsweise möglich die membranen nach der Trocknung mit einem silikon-artiges Elastomer wie z. B. Sylgard® 184 zu behandeln um mögliche Defekten zu reparieren.

Man erhält in Schritt a) bevorzugt Fasern mit Aussendurchmessern von 100 bis 1000 $\mu$m, bevorzugt zwischen 200 und 700 $\mu$m und besonders bevorzugt zwischen 250 und 400 $\mu$m.

Die so hergestellten Hohlfasermembranen werden anschließend der oben im Detail erläuterten Temperung in Verfahrensschritt Schritt b) zugeführt.

Details zur Herstellung der Membranen mit den Schritten a1) bis a3) können der WO 2011/009919 entnommen werden, deren Inhalt hiermit explizit in die Beschreibung der vorliegenden Erfindung mit einbezogen wird.

In einer alternativen bevorzugten Ausführungsform der vorliegenden Erfindung wird in Schritt a) aus, einem Polyimidpulver, welches bevorzugt getrocknet ist, zunächst eine Gießlösung und daraus die Membran hergestellt. Dieses Verfahren ist zwar aufwendiger als das oben erläutert Verfahren der ersten bevorzugten Ausführungsform, die Herstellung aus dem Pulver hat im Gegenzug jedoch den Vorteil, dass damit auch Hersteller ohne eigene Polyimidpolymerisationsmöglichkeiten in der Lage sind das erfindungsgemäße Verfahren durchzuführen und erfindungsgemäße Membranen herzustellen.

In dieser zweiten bevorzugten Ausführungsform umfasst das Verfahren in Schritt a) die folgenden Teilschritte:

aI) bereitstellen eines, optional getemperten, erfindungsgemäßen Polyimidpolymers in Form eines, bevorzugt getrockneten, Feststoffs, bevorzugt eines Pulvers oder Granulats,

aII) Herstellen einer Gießlösung, wobei diese Gießlösung ein Lösungsmittel und den Feststoff aus Schritt aI) umfasst; und

aIII) Bilden einer Hohlfasermembran.

In Schritt aI) kann ein kommerziell erhältliches Polyimidpulver oder -granulat, z. B. P84 Typ 70 oder P84 HT der Evonik Fibers eingesetzt werden. Es kann auch zuerst ein Polyimid wie im obigen Verfahren in Schritt a1) erläutert hergestellt und dann der Feststoff isoliert und getrocknet werden.

Kommerziell erhältliche Polyimide können direkt zu Herstellung von Membranen eingesetzt werden. Es kann jedoch vorteilhaft sein das Polyimid vor Schritt aII), bevorzugt über einen Zeitraum von 6-30 Stunden, besonders bevorzugt 10 bis 16 Stunden, bei einer Temperatur von 50-250 °C, bevorzugt 100 bis 200 °C zu trocknen und/oder tempern. Der Temper-und/oder Trocknungsschritt kann als mechanisches Tempern/Trocknen, thermisches Trocknen/Tempern oder eine Kombination daraus durchgeführt werden. Die Trocknung/Temperung kann im Vakuum oder unter Inertgasspülung erfolgen. Ja nach eingesetztem Polyimidpulver kann es dabei zu einem Molekulargewichtsaufbau kommen. Wird die Temperatur zu hoch gewählt oder zu lange getempert, so kann eine Gelbildung einsetzen. Dies ist zu vermeiden, da ansonsten keine Gießlösung mehr hergestellt werden kann. Der Fachmann erkennt jedoch die einsetzende Gelbildung und wird die Temperatur erniedrigen bis keine Gelbildung stattfindet.

Die Temperung erfolgt bevorzugt als kontrollierte Temperung, wobei durch Kontrolle der Zeit und der Temperatur der beabsichtigte Molekulargewichtsaufbau gesteuert wird.

Eine bevorzugte Methode ist dadurch gekennzeichnet, dass ein kommerziell erhältliches Polyimidpulver in einem Ofen oder Drehrohrtrockner erhitzt werden. Die Temperatur wird bevorzugt im Bereich von 100 bis 250°C und besonders bevorzugt im Bereich von 140 - 180 °C gewählt. Vorzugsweise wird der Ofen oder Drehrohrtrocknet evakuiert auf Vakuum von mindestens 0,5 bar, bevorzugt mindestens 0,6 bar, besonders bevorzugt 0,6 bis 0,9 bar. Die Dauer der Temperung beträgt bevorzugt 6 bis 30 Stunden, besonders bevorzugt 10 bis 16 Stunden. Optional kann die Temperung in einem Innertgasstrom erfolgen.

Aus dem Feststoff gemäß Schritt aI) wird in dieser Ausführungsform anschließend in Schritt aII) nach dem Fachmann an sich bekannten Verfahren eine Gießlösung hergestellt.

Die Herstellung der Hohlfasermembran aus der Gießlösung in Schritt aIII) ist an sich bekannt. Bevorzugt erfolgt die Herstellung wie im obigen Verfahren unter a3) erläutert.

In den Schritten a3) oder aIII) wird bevorzugt, eine integral asymmetrische Hohlfasermembran hergestellt, wobei speziell bevorzugt die Hohlfaser mittels einer Zweistoffdüse aus einer Polyimidgießlösung und einer Bore Lösung in einem kontinuierlichen Verfahren gesponnen wird.

Die erfindungsgemäßen Polyimidmembranen zeichnen sich somit dadurch aus, dass

- es nach dem erfindungsgemäßen Verfahren erhältlich ist,
- es sich bei dem Polyimid um ein Polyimid umfassend

  mindestens einem Dianhydrid, ausgewählt aus der Gruppe bestehend aus 3,4,3'4'-Benzophenontetra-carbonsäuredianhydrid, 1,2,4,5-Benzoltetracarbonsäuredianhydrid, 3,4,3'4'-Biphenyltetra-carbonsäuredianhydrid, Oxydiphthalsäuredianhydrid, Sulfonyldiphthalsäuredianhydrid, 1,1,1,3,3,3-Hexafluor-2,2-propylidendiphthalsäuredianhydrid

  und

  mindestens einem Diisocyanat, ausgewählt aus der Gruppe bestehend aus Toluol-2,4-diisocyanat, Toluol-2,6-diisocyanat, 4,4'-Methylendiphenyldiisocyanat, 2,4,6- Trimethyl-1,3-phenylendiiso-cyanat, 2,3,4,5-Tetramethyl-1,4-phenylendiiso-cyanat

  handelt,

und dass

- der Gehalt an polymerfremden, vernetzend wirkenden Substanzen in der Membran im Bereich von 0 bis 5 Gew. %, bevorzugt 0 bis 1 Gew. % liegt

- sie eine Löslichkeit in DMF von 5 bis 95 %, bevorzugt 5 bis 90%, besonders bevorzugt 10 bis 80% und ganz besonders bevorzugt 20 bis 70 % aufweisen

- sie eine Schichtdicke der trennaktiven Schicht von kleiner gleich 1,5 μm, bevorzugt kleiner gleich 1 μm,ganz besonders bevorzugt kleiner gleich 750, speziell bevorzugt kleiner gleich 500 nm, ganz speziell bevorzugt kleiner gleich 250 nm und insbesondere bevorzugt kleiner gleich 100 nm aufweisen.

Bevorzugt handelt es sich bei dem Polyimid um ein Polyimid wie oben bei der Beschreibung des Herstellungsverfahrens als bevorzugt offenbart.

Wie bereits erwähnt ist es mit dem erfindungsgemäßen Verfahren erstmals gelungen Membranen mit einer sehr hohen Gas-Selektivität bei gleichzeitig sehr guter Produktivität und einer hohen Molekulargewichtsbeständigkeit bei thermischer Belastung herzustellen. Die erfindungsgemäß getemperten Membranen zeichnen sich durch eine mittels des erfindungsgemäßen Verfahrens variabel einstellbare DMF-Löslichkeit aus und unterscheiden sich auch dadurch von den nicht getemperten Membranen des Standes der Technik, welche ohne Zusatz von Vernetzern, d.h. polymerfremden Substanzen, vollständig in DMF-löslich sind.

Besonders an den erfindungsgemäßen Membranen ist, dass die thermische Stabilität und die Unlöslichkeit in DMF ohne Zusatz polymerfremden Substanzen, d.h. von nicht erfindungsgemäßen Polymeren in einem Blend oder Copolymer (wie im Stand der Technik empfohlen) oder Vernetzern (Ebenfalls Stand der Technik) erreicht wird.

Grundsätzlich ist es jedoch möglich im erfindungsgemäßen Verfahren auch einen Blend, bevorzugt aus erfindungsgemäßen Polymeren, herzustellen und dann zu tempern.

Wie bereits erwähnt weisen die erfindungsgemäßen Membranen eine deutlich dünnere Trennschicht auf als die des Standes der Technik. Dennoch weisen sie eine mindestens vergleichbare Selektivität auf. Die Permeanz der erfindungsgemäßen Membranen und somit die Produktivität ist jedoch sehr viel besser als die der Membranen des Standes der Technik.

Die die Erfindung betreffenden Hohlfasermembranen können sowohl Porenmembranen in Form von Micro-, Ultra- oder Nanofiltartionsmembranen als auch - wie in den bevorzugten Verfahrensvarianten beschrieben - porenfreie Membranen zur Trennung von Gasen sein. Alle Membranen sind integral asymmetrische Membranen und werden durch ein Phaseninversionsverfahren hergestellt. Besonders bevorzugt handelt es sich um Gasseparationsmembrane und speziell bevorzugt um Hohlfasergasseparationsmembrane.

Die erfindungsgemäßen Polyimidmembranen werden bevorzugt zur Auftrennung von Methan und Kohlendioxid und/oder zur Auftrennung von Sauerstoff und Stickstoff und/oder zur Abtrennung von Wasserstoff aus Prozessgasen und/oder zur Abtrennung von Wasserdampf und/oder Helium aus Gasen oder Gasgemischen verschiedenster Art verwendet

**Analytik**

Viskositätsbestimmung

Die dynamische Viskosität η wird durch Scherung der Polymerlösung in einem zylindrischen Spalt bei konstanter Temperatur von 25°C einmal durch Vorgabe verschiedener Drehzahlen Ω (bzw. Schergefällen γ), konkret gemessen wird beim Schergefälle 1,25; 2,5; 5,0; 10,0; 20,0; und 40,0 1/s und anschließend durch Schubspannungen τ von 2250 bis 100 Pa jeweils 10 s ermittelt.

Als Messgerät wird ein HAAKE RS 600 verwendet mit einer flüssigtemperierbaren Messbecheraufnahme TEF/Z28, einem zylindrischen Rotor Z25DIN53019/ISO3219 und Alu-Einwegmessbecher Z25E/D=28mm

Die dynamische Viskosität η berechnet sich aus folgenden Formeln und wird bei einem Schergefälle von 10 $s^{-1}$ in Pa.s angegeben.

Viskositätsfunktion

$$\frac{\tau}{\gamma} = \eta * \gamma^2$$

Schergefälle

$$\gamma = M * \Omega$$

τ ... Schubspannung

$\eta$ ... Dynam. Viskosität
M ... Scherfaktor des Rotors: 12350 rad/s
$\Omega$ ... Winkelgeschwindigkeit

Molmassenbestimmunq

Die Molmassenbestimmung erfolgt mit Hilfe einer Gelpermeationschromatographie. Die Kalibrierung erfolgt mit Polystyrolstandards. Die berichteten Molmassen sind daher als relative Molmassen zu verstehen.

Folgende Komponenten und Einstellungen wurden verwendet:

**Tabelle 1:**

| | |
|---|---|
| HPLC | WATERS 600 Pumpe, 717 Autoinjektor, 2487 UV-Detektor |
| Vorsäule | PSS SDV Vorsäule |
| Säulen | PSS SDV 10$\mu$m 1000, $10^5$ und $10^6$ Å |
| Laufmittel | 0.01 M LiBr + 0.03M $H_3PO_4$ in DMF (sterilfiltriert, 0.45$\mu$m) |
| Fluss | 1.0ml/min |
| Laufzeit | 45min |
| Druck | ~1.550psi |
| Wellenlänge | 270 nm (bei Verwendung des UV-Detektors) |
| Injektionsvolumen | 50 $\mu$l bzw. 20 $\mu$l (für Lösungen c >1g/l) |
| Standards | PS(Polystyrol)-Standards (engverteilt, 300-3*$10^6$, Fabrikat Firma PSS) |

Permeabilitäten

Die Gaspermeabilitäten werden in Barrer ($10^{-10}$ $cm^3 \cdot cm^{-2}.cm.s^{-1}.cmHg^{-1}$) angegeben. Die Permeanzen der Hohlfasermembranen für Gase werden in GPU (Gas Permeation Unit, $10^{-6}$ $cm^3 \cdot cm^{-2}.s^{-1}.cmHg^{-1}$) angegeben. Die Flüsse von Nano- und Ultrafiltrationsmembranen werden in $l.m^{-2}.h^{-1}.bar^{-1}$ angegeben.

*Gaspermeabilitäten*

Die Messung der Permeabilitäten für Gase erfolgt nach der Druckanstiegsmethode. Hierbei wird eine Flachfolie mit einer Dicke zwischen 10 und 70 $\mu$m auf einer Seite mit einem Gas oder Gasgemisch beaufschlagt. Auf der anderen Seite, der Permeatseite herrscht zu Beginn des Versuches Vakuum (ca. $10^{-2}$ mbar). Es wird nun der Druckanstieg auf der Permeatseite über die Zeit aufgezeichnet.

Die Permeabilität des Polymeren lässt sich nach folgender Formel berechnen:

$$P = \frac{V_{dead}.MW_{gas}.l}{\rho.R.T.A.\Delta p}.\frac{dp}{dt}.10^{10}$$

P ... Permeabilität in Barrer ($10^{-10}$ $cm^3 \cdot cm^{-2}.cm.s^{-1}.cmHg^{-1}$)
$V_{dead}$ ... Volumen der Permeatseite in $cm^3$
$MW_{gas}$ ... Molmasse des Gases in $g.mol^{-1}$
I ... Dicke der Folie in cm
p .... Dichte des Gases in $g.cm^{-3}$
R ... Gaskonstante in $cm^3.cmHg.K^{-1}.mol^{-1}$
T ... Temperatur in Kelvin (Raumtemperatur, ~23°C)
A ... Fläche der Folie in $cm^2$ (-12 $cm^2$)
$\Delta$p ... Druckdifferenz zwischen Feed und Permeatseite in cmHg
dp/dt . Druckanstieg pro Zeit auf der Permeatseite in $cmHg.s^{-1}$

Wenn die Permeanz von Hohlfasern gemessen wird, so wird eine Volumenanstiegsmethode verwendet.
Die Berechnung der Permeanz P/l (weil Dicke der Trennschicht unbekannt ist) erfolgt nach folgender Formel:

$$P/l = \frac{Q(STP)}{R.T.A.\Delta p}.10^6$$

P/l ... Permeanz in GPU (Gas permeation units. $10^{-6}$ $cm^3 \cdot cm^{-2}.s^{-1}.cmHg^{-1}$)
Q ... Gasfluss der Permeatseite in $cm^3$ (STP)/s
R ... Gaskonstante in $cm^3.cmHg.K^{-1}.mol^{-1}$
T ... Temperatur in Kelvin (Raumtemperatur, ~23°C)
A ... Außenfläche der Hohlfaser in $cm^2$ (Zwischen 60 und 80 $cm^2$)
$\Delta p$ ... Druckdifferenz zwischen Feed und Permeatseite in cmHg
dp/dt . Druckanstieg pro Zeit auf der Permeatseite in $cmHg.s^{-1}$

Die Selektivitäten von verschiedenen Gaspaaren sind Reingasselektivitäten. Die Selektivität zwischen zwei Gasen berechnet sich aus dem Quotient der Permeabilitäten:

$$S = \frac{P_1}{P_2}$$

S ... ideale Gasselektivität
$P_1$ ... Permeabilität oder Permeanz des Gases 1
$P_2$ ... Permeabilität oder Permeanz des Gases 2

Bestimmung der DMF Löslichkeit

Zur Bestimmung der DMF-Löslichkeit werden jeweils 20 mg des getemperten und des ungetemperten Polymers bzw. der ungetemperten Membran beim Raumtemperatur in 10 ml DMF gegeben und ohne rühren für 4h belassen. Beim ungetemperten Polymer bzw. der ungetemperten Membran erhält man eine vollständige Lösung. Beim getemperten Polymer bzw. der getemperten Membran wird ein evtl. vorhandener Rückstand abfiltriert. Anschließend erfolgt von beiden Lösungen mittels GPC die Bestimmung der Molmasseverteilung wie weiter oben erläutert. Die Ermittlung der Löslichkeit folgt auf Basis des hydrodynamischen Volumens der Polymerketten aus dem Verhältnis der Fläche der erhaltenen Molmassenverteilung des getemperten Polymers zur Fläche des vollständig löslichen ungetemperten Polymers.

Bestimmung des Anteils an Restlösungsmittel

Das Restlösungsmittel (z. B. Isopropanol, Hexan) wird mittels Gaschromatographie durch Dampfraum-Injektion (Headspace) des in 1,3-Dimethyl-3,4,5,6-tetrahydro-2(1H)-pyrimidinon (DMPU) gelösten bzw. dispergierten Polymers bestimmt.
Von der Probe werden 250 - 300 mg in ein tariertes Vial auf 0,1 mg genau eingewogen (= Einwaage). Danach werden 5,00 ml DMPU mittels Vollpipette oder Dispensette zupipettiert und das Vial mit dem Septum mittels Verschlußzange verschlossen. Die Probe wird am Headspacesampler 90 min auf 120°C thermostatisiert, danach erfolgt die Headspace-Injektion auf die GC Säule.
Rest-DMF der feuchten Hohlfaserprobe wird mittels Soxhlet-Extraktion in Ethanol bestimmt. Die anschließende Quantifizierung erfolgt durch Direkteinspritzung des Extraktes am GC. Rest-DMF der trockenen Hohlfaserprobe wird mittels Headspace-GC bestimmt.

| | |
|---|---|
| GC: | Perkin Elmer AutoSystem XL |
| Säule: | Perkin Elmer WAX ETR, 30 m x 0,53mm, df = 2,00μm, #N931-6570 |
| Headspace-Autosampler: | Perkin Elmer TurboMatrix 40 |
| Trägergas: | 5 ml Helium 4.6 (oder besser) |
| FID-Detektorgase: | 40 ml/Minute Wasserstoff, 400 ml/min Synth. Luft |

Temperaturprogramm am GC:

| | |
|---|---|
| Init.temp.: | 175°C für 3 Minuten, |
| Rampe1: | 20°/Min auf 230°C für 3 Minuten |
| Laufzeit: | 8,75 Minuten |
| Cyclus-Zeit: | 15 Minuten |

Der Rest-Lösungsmittel Gehalt wird nach erfolgter Analyse automatisch nach der Formel

$$\frac{\text{Area}}{\text{Cal.curve} \cdot \text{Einwaage[mg]}} \cdot 100 = \text{Rest - Lösungsmittel (\%)}$$

berechnet und unter "Konzentration [%]" ausgedruckt

**Bestimmung des Restwassergehalts**

Zur Bestimmung des Restwassergehalts wird eine Extraktion der Membranen mit Isopropanol und anschließend eine Analyse per Karl Fischer Titration durchgeführt. Die Membranen werden in ein vorher getrocknetes 250 ml Schottglas überführt und mit einer abgewogenen Menge mit trockenem Isopropanol bis oben bedeckt. Der Behälter wird über Nacht bei Raumtemperatur stehen gelassen.

**Herstellungsbeispiele**

Die nachfolgenden Beispiele dienen zur näheren Erläuterung und zum besseren Verständnis der vorliegenden Erfindung, schränken diese jedoch in keiner Weise ein.

**Beispiel 1**

Zur Herstellung der Spinnlösung wurde in einem 3l Glaskolben, ausgestattet mit einem Rührwerk und Rückflusskühlern, 1800g Dimethylformamid wasserfrei vorgelegt. Darin wurden 316,4g 3,3',4,4'-Benzophenontetracarbonsäuredianhydrid und 142,8g Pyromellitsäuredianhydrid gelöst und auf 80°C aufgeheizt. Zu dieser Lösung werden 1,8g Diazabicyclooctan gegeben. Unter Stickstoffbeaufschlagung werden 283,4 g einer Mischung aus 80% 2,4-Toluylendiisocyanat und 20% 2,6-Toluylendiisocyanat während mehrerer Stunden zudosiert. Dabei entwich $CO_2$ als Nebenprodukt und es entstand direkt ein Polyimid in Lösung.

Die so erhaltene 27 Gew. % igen Spinnlösung in DMF wurde danach entgast, auf 50°C thermostatiert und mittels einer Zahnradpumpe durch eine Zweistoffdüse gefördert. Der Fluss betrug 324 g/h. Während im Außenbereich der Zweistoffdüse die Polymerlösung gefördert wurde, wurde innen eine Mischung (Bore Lösung) aus 70% Dimethylformamid und 30% Wasser gefördert um das Loch der Hohlfasern zu produzieren. Der Fluss der Bore-lösung betrug 120 ml/h. Nach einem Abstand von 13 cm von der Düse trat die Hohllfaser in 50°C warmes Wasser ein. Auf dem Weg zwischen Düse und Fällbad wurde die Hohlfaser mit einem Rohr umhüllt. Dieses Rohr wurde mit einem Stickstoffstrom von 11/min durchflutet, die Rohrinnentemperatur betrug 35°C. Die Faser wurde durch das Wasserwaschbad gezogen und schließlich mit einer Geschwindigkeit von 50 m/min aufgewickelt. Nach einer Extraktion mit Wasser über mehrere Stunden wurden die Hohlfasern in Isopropanol getaucht. Nach dem Lösungsmittelaustausch wurden die Membranen bei 70 °C durch eine Trockenstrecke geführt und in ca. 40 Sekunden getrocknet. Die erhaltenen Membranen enthalten ca. 2 Gew.% Restwasser, ≤ 0.5 Gew.% Restlösungstmittel (Isopropanol, Hexan) und < 0.1 Gew.% RestDMF und wurden auf erfindungsgemäße Temperaturen von 300 °C mit einer Aufheizrate von 0,2 °C/min in einem Vakuum von 30 mbar absolut (N2-gespült, $O_2$-Gehalt < 0,001 Vol. %) erhitzt und anschließend für 2h bei der Endtemperatur belassen.

Es wurde festgestellt, dass nach der erfindungsgemäßen Temperung und auch nach 3 monatiger Lagerung das Molekulargewicht Mp der Membranen 102 kDa betrug. Die erfindungsgemäßen Membranen sind somit thermisch stabil und weisen keinen Molekulargewichtsabbau auch nach mehrmonatiger Lagerung auf.

**Vergleichsbeispiel 1:**

Es wurden Hohlfasermembranen wie in Beispiel 1 hergestellt und getempert. Im Gegensatz zu Beispiel 1 wurde die Temperungstemperatur jedoch auf 265°C bzw. 250 °C reduziert. Die Ergebnisse der Versuche finden sich in nachfolgender Tabelle 2:

**Tabelle 2**

| Dauer der Temperung | Mp (kDa) | |
|---|---|---|
| | Tag 1 | Nach 3 Monaten |
| Nicht getempert | 102 | 88 |
| 250°C | 86 | 82 |
| 265°C | 85 | 80 |

Im Gegensatz zu Beispiel 1 zeigt Tabelle 2, dass bei einer nicht erfindungsgemäßen Temperung bei zu niedrigen Temperaturen keine hinreichende Lagerstabilität gegeben ist.

**Beispiel 2**

Um den Effekt der Temperatur bei der Temperung noch weiter zu verdeutlichen wurden erneut mehrere Membranen gemäß erfindungsgemäßem Beispiel 1 hergestellt. Die Aufheizrate bei der Temperung wurde jedoch auf 5 °C/min erhöht. Die Aufheizung erfolgte unter $N_2$-Athmosphäre mit einem $O_2$-gehalt von 0.001 Vol.% auf Temperaturen von 290 bis 320 °C. Von den erhaltenen Membranen wurde die DMF-Löslichkeit, die $CO_2$-Permeanz, die $CO_2/CH_4$-Selektivität und die mechanischen Eigenschaften bestimmt und in Tabelle 3 zusammengefasst.

**Tabelle 3**

| Endtemp. (°C) | DMF-Lösl.(%) | $CO_2$-Perm.(GPU) | $CO_2/CH_4$-Sel. |
|---|---|---|---|
| Ungetempert | 100 | -500 | <2 |
| 300 | 90 | 41.4 | 63.9 |
| 310 | 70 | 29.0 | 87.8 |
| 320 | 40 | 20.1 | 75.6 |

Es zeigte sich, dass die Temperung die Selektivität im Vergleich zu den ungetemperten Membranen deutlich erhöhte. Die Permeanz ist in allen Beispielen sehr gut. Die DMF-Löslichkeit und somit die Chemikalienbeständigkeit kann durch die Wahl der Temperungstemperatur ebenfalls gesteuert werden ohne eine signifikante Beeinträchtigung der Selektivität hinnehmen zu müssen. Die mechanischen Eigenschaften wurden durch die Temperatur nicht nachteilig beeinflusst.

**Beispiel 3**

In diesem Beispiel soll im Gegensatz zu Beispiel 2 nicht der Einfluss der Temperungstemperatur, sondern der Einfluss der Dauer der Temperung gezeigt werden. Um den Effekt der Dauer der Temperung zu verdeutlichen wurden erneut mehrere Membranen gemäß erfindungsgemäßem Beispiel 1 hergestellt und getempert. Die Endtemperatur der Temperung wurde konstant auf 310 °C bzw. 320 °C gehalten und die Dauer der Temperung variiert. Von den erhaltenen Membranen wurde die DMF-Löslichkeit bestimmt und in Tabelle 4 zusammengefasst.

**Tabelle 4**

| Endtemperatur (°C) | Dauer (min) | DMF-Löslichkeit (%) |
|---|---|---|
| 310 | 30 | 70 |
| 310 | 60 | 70 |
| 310 | 90 | 31 |
| 310 | 180 | 23 |
| 310 | 240 | 17 |
| 320 | 90 | 18 |
| 320 | 240 | 11 |

Tabelle 4 zeigt, dass neben der Temperatur auch über die Dauer der Temperung die Chemikalienbeständigkeit eingestellt werden kann.

**Beispiel 4:**

In diesem Beispiel wird der Einfluss des Sauerstoffgehalts der die Membran während der Temperung umgebenden Atmosphäre gezeigt. Dazu wurde Beispiel 1 wiederholt jedoch jeweils 1h bei 310 °C getempert.
Es wurden 3 Temperversuche durchgeführt wobei in

- Beispiel 4 - erfindungsgemäß mit einem Sauerstoffgehalt in $N_2$-Spülgas von 0,1 Vol. %
- Beispiel 4 - Vergleich 1: Sauerstoffgehalt in $N_2$-Spülgas 1 Vol. %
- Beispiel 4 - Vergleich 2: Sauerstoffgehalt in $N_2$-Spülgas 5 Vol. %

Von den erhaltenen Membranen wurden die $CO_2/CH_4$-Selektivität, und die Zugfestigkeit bestimmt. Die Ergebnisse finden sich in nachfolgender Tabelle 5

**Tabelle 5**

| | $CO_2/CH_4$-Selektivität | Dehnung in % |
|---|---|---|
| Beispiel 4 - erfindungsgemäß | 111,9 | 26,51 |
| Beispiel 4 - Vergleich 1 (nicht erfindungsgemäß) | 26,8 | 20,09 |
| Beispiel 4 - Vergleich 1 (nicht erfindungsgemäß) | Nicht bestimmt | 20,66 |

Die Ergebnisse in Tabelle 5 zeigen, dass ein niedriger Sauerstoffgehalt in der die Membran direkt umgebenden Atmosphäre im erfindungsgemäßen Verfahren essentiell für eine gute Selektivität und für gute mechanischen Eigenschaften der Membran ist.

**Vergleichsbeispiel 2**

In diesem Beispiel wird gezeigt, dass die Temperung in einer durch Vakuum erzeugten sauerstofffreien Atmosphäre, so wie im Stand der Technik WO 2006/068626, gelehrt deutliche Nachteile im Vergleich zum erfindungsgemäßen Verfahren, in dem in einer Gasatmosphäre mit niedrigem Sauerstoffgehalt getempert wird, aufweist.
Es wurde wie in Beispiel 4 verfahren, jedoch wurde 1h bei 310 °C im Vakuum getempert. Danach wurde die $O_2$-Permeanz und die $O_2/N_2$-Selektivität gemessen.
Nachfolgende Tabelle 6 enthält die Ergebnisse aus Vergleichsbeispiel 2 und zum Vergleich die einer nach Beispiel 4 - erfindungsgemäß hergestellten Membran:

**Tabelle 6:**

| | $O_2/N_2$-Selektivität | $O_2$-Permeanz [GPU] |
|---|---|---|
| Beispiel 4 - erfindungsgemäß | 7,9 | 7,6 |
| Membran nach Vergleichsbeispiel 2 | 7,9 | 2,6 |

Die Ergebnisse aus Tabelle 6 zeigen, dass das Verfahren der WO 2006/068626 zwar - wie dort korrekt beschrieben - zu einer guten Selektivität führt. Die nach der WO 2006/068626 im Vakuum getemperten Membranen weisen jedoch eine um ca. 300% schlechtere Permeanz auf. Somit können die nach dem Verfahren des Standes der Technik getemperten Membranen nicht wirtschaftlich eingesetzt werden.
Es wurde zudem festgestellt, dass die im Vakuum getemperten Hohlfasermembranen sehr stark unterschiedlich verfärbt waren, von gelb bis braun. Eine braune Farbe weist auf eine starke Verdichtung hin und ist vermutlich verursacht worden durch eine schlechte Temperaturverteilung im Vakuum. Diese Beobachtung deckt sich mit den Permeanzdaten aus Tabelle 6. Somit ist ein Vakuum eindeutig nicht das geeignete Tempermedium.

**Beispiel 5**

In diesem Beispiel wird gezeigt, dass des erfindungsgemäße Verfahren auch mit Blends zweier erfindungsgemäßer Polyimide durchgeführt werden kann. Dazu wurde eine 27% ige Spinnlösungen aus einem Blend zweier Polyimide

in DMF hergestellt, wobei 95% von Polyimid 1 mit und 5% Polyimid 2 gemischt wurden.

Zur Herstellung der Polyimidlösung 1 in DMF wurde in einem 3l Glaskolben, ausgestattet mit einem Rührwerk und Rückflusskühlern, 1622g Dimethylformamid wasserfrei vorgelegt. Darin wurden 456,4g 3,3',4,4'-Benzophenontetracarbonsäuredianhydrid gelöst und auf 85°C aufgeheizt. Zu dieser Lösung wurden 0,45g zerkleinertes Natriumhydroxid gegeben. Unter Stickstoffbeaufschlagung wurden 266,8 g einer Mischung aus 80% 2,4-Toluylendiisocyanat bzw. 2,6-Toluylendiisocyanat und 20% 4,4'- Diphenylmethandiisocyanat während mehrerer Stunden zudosiert. Dabei entwich $CO_2$ als Nebenprodukt und es entstand direkt ein Polyimid in Lösung.

Zur Herstellung der Polyimidlösung 2 in DMF wurde in einem 3l Glaskolben, ausgestattet mit einem Rührwerk und Rückflusskühlern, 1800g Dimethylformamid wasserfrei vorgelegt. Darin wurden 316,4g 3,3',4,4'-Benzophenontetracarbonsäuredianhydrid und 142,8g Pyromellitsäuredianhydrid gelöst und auf 80°C aufgeheizt. Zu dieser Lösung werden 1,8g Diazabicyclooctan gegeben. Unter Stickstoffbeaufschlagung werden 283,4 g einer Mischung aus 80% 2,4-Toluylendiisocyanat und 20% 2,6-Toluylendiisocyanat während mehrerer Stunden zudosiert. Dabei entwich $CO_2$ als Nebenprodukt und es entstand direkt ein Polyimid in Lösung.

Die Polyimidlösungen wurden in einer Kat-Dose zusammengemischt und am Rollbock über das Wochenende homogenisiert. Es ergab sich eine Bulkviskosität: 79 Pas bei 25°C und ein Feststoffgehalt: 27,8 %.

Die so erhaltene Gießlösung wurde entgast, auf 50°C thermostatiert und mittels einer Zahnradpumpe durch eine Zweistoffdüse gefördert. Der Fluss betrug 324 g/h. Während im Außenbereich der Zweistoffdüse die Polymerlösung gefördert wurde, wurde innen eine Mischung (Bore Lösung) aus 70% Dimethylformamid und 30% Wasser gefördert um das Loch der Hohlfasern zu produzieren. Der Fluss der Bore-lösung betrug 120 ml/h. Nach einem Abstand von 13 cm von der Düse trat die Hohllfaser in 50°C warmes Wasser ein. Auf dem Weg zwischen Düse und Fällbad wurde die Hohlfaser mit einem Rohr umhüllt. Dieses Rohr wurde mit einem Stickstoffstrom von 1l/min durchflutet, die Rohrinnentemperatur betrug 35°C. Die Faser wurde durch das Wasserwaschbad gezogen und schließlich mit einer Geschwindigkeit von 50 m/min aufgewickelt. Nach einer Extraktion mit Wasser über mehrere Stunden wurden die Hohlfasern in Isopropanol getaucht und danach in einer Trockenstrecke bei 70°C getrocknet. Die erhaltenen Membrane enthalten weniger als 2 Gew.% Wasser, ≤ 0.5 Gew.% Rest-Lösungsmittel (Isopropanol, Hexan) und 0.1 Gew.% RestDMF, wurden auf 310°C mit einer Aufheizrate von 2°C/min in $N_2$ ($O_2$-Gehalt von 0.001%) erhitzt und anschließend für 1h bei der Endtemperatur belassen.

Die erhaltenen Membranen hatten eine CO2-Permeanz von 27 GPU und eine $CO_2/CH_4$-Einzelgasselektivität von 93. Eine DMF-Löslichkeit gemessen von ca. 70% wurde ermittelt. Diese Ergebnisse bestätigen, dass das erfindungsgemäße Verfahren auch mit einem Blend aus verschiedener Polyimiden funktioniert.

**Beispiel 6**

Entsprechend dem erfindungsgemäßen Beispiel 5 jedoch ohne die zweite Polyimidlösung wurden Hohlfasermembranen hergestellt. Die erhaltenen Membrane enthielten nach der Trocknung weniger als 2 Gew.% Wasser, ≤ 0,5 Gew% Rest-Lösungsmittel (IPA, Hexan) und ≤ 0,1 Gew% RestDMF und wurden auf 280 bzw. 290°C mit einer Aufheizrate von 2°C/min in $N_2$ erhitzt und anschließend für 1h bei der Endtemperatur belassen.

Tabelle 7 zeigt die Ergebnisse der Permeanzmessungen. Tabelle 8 zeigt die mechanische Eigenschaften und die bestimmte Löslichkeit.

**Tabelle 7:**

| Endtemperatur (°C) | CO2-Permeanz (GPU) | CO2/CH4-Selektivität |
|---|---|---|
| 280 | 23,8 | 28,7 |
| 290 | 10,1 | 54,6 |

**Tabelle 8:**

| Endtemperatur (°C) | Festigkeit (cN/tex) | Ausdehnung (%) | DMF-Löslichkeit (%) |
|---|---|---|---|
| 280 | 5,98 | 32,67 | 74 |
| 290 | 5,71 | 29,89 | 58 |

Die Ergebnisse zeigen, dass auch mit dem hier verwendeten Polymer - in diesem Beispiel entspricht diese P84 Typ 70 - nach dem erfindungsgemäßen Prozess, d.h. ohne Zugabe von Vernetzern, vernetzte, hoch selektive und produktive Membranen erhalten werden können.

**Vergleichsbeispiel 3**

Nachdem in Vergleichsbeispiel 2 gezeigt wurde, dass des Temperungsverfahren aus der WO 2006/068626, d.h. Temperung im Vakuum, dem der vorliegenden Erfindung deutlich unterlegen ist, wird hier gezeigt, dass dies auch für das Verfahren der EP 0321569 gilt.

Es wurde eine Membran gemäß obigen Beispiel 6 hergestellt und entsprechend Beispiel 20 der EP 0321569 wie folgt getempert (alles an Luft):

- 30 min bei 100 °C
- Aufheizen auf 200 °C
- In 16 min Aufheizen von 200 auf 320 °C
- 14 min auf 320 °C halten und natürlich abkühlen.

Nachfolgende Tabelle 9 enthält die Ergebnisse aus Vergleichsbeispiel 3 und zum Vergleich die einer nach Beispiel 6 - erfindungsgemäß hergestellten Membran die erfindungsgemäß wie folgt getempert wurde (Aufheizrate 2 °C/Minute von 250 auf 290 °C, 1h bei 290 °C in einer $O_2$ freien $N_2$-Atmosphäre):

**Tabelle 9:**

| | Ungetempert | | Getempert | | | |
|---|---|---|---|---|---|---|
| | $O_2$-Perm. [GPU] | $O_2/N_2$-Sel. | $O_2$-Perm. [GPU] | $O_2/N_2$-Sel. | Festigkeit [cN/tex] | Bruchdehnung [%] |
| Beispiel 6 - erfindungsgemäß | 916 | 1,3 | 2,00 | 5,9 | 6,9 | 34 |
| Membran nach Vergleichsbeispiel 3 | 916 | 1,3 | 0,68 | 1,1 | 6,5 | 31,7 |

Tabelle 9 zeigt, dass die Temperung nach dem erfindungsgemäßen Verfahren zu einer um ca. den Faktor 5,5 besseren Selektivität und zu einer um ca. den Faktor 3 besseren Permeanz führt obwohl eine deutlich niedrigere Temperungstemperatur verwendet wurde.

Die mechanischen Eigenschaften der erfindungsgemäß getemperten Membranen sind ebenfalls deutlich besser.

**Vergleichsbeispiel 4:**

Diese Vergleichsbeispiel geht noch einen Schritt weiter als Vergleichsbeispiel 3 und zeigt, dass der bereits sehr positive Effekt durch das erfindungsgemäße Temperungsverfahren noch gesteigert werden kann durch ein erfindungsgemäßes bevorzugtes Herstellungsverfahren der zu tempernden Membran.

In Vergleichsbeispiel 3 wurde eine nach einem erfindungsgemäß bevorzugten Herstellungsverfahren hergestellte ungetemperte Membran getempert. Somit wurden von der EP 0321569 lediglich die Temperungsbedingungen übernommen. In Vergleichsbeispiel 4 wurde nun komplett nach der EP 0321569 gearbeitet, d.h. in Schritt a) eine Membran gemäß Beispiel 1 der EP 0321569 hergestellt und dann wie in Vergleichsbeispiel 3 beschrieben getempert. Dazu wurde gemäß Reference Preparation Example 1 der EP 0321569 eine 25 % ige Lösung von P84 Typ 70 in DMF hergestellt. Die Spinnbedingungen waren wie folgt:

- 2,4 ml/min Spinnlösung; 0,86 ml/min Boreflüssigkeit
- Verweilzeit in Fällbad = 8 - 10 s; Fällbad unbeheizt (27 °C)
- Boreflüssigkeit 50/50 DMF/$H_2O$
- Kein Spinnschacht, statt dessen Luftspalt 12 cm
- Membranen werden 10 min in Behälter mit Wasser eingetaucht
- Membranen werden ohne Lösungsmittelaustausch an der Luft für 24 h getrocknet

Getempert wurde wie in Vergleichsbeispiel 3. Folgende Ergebnisse wurden erhalten:

**Tabelle 10:**

| | Ungetempert | | Getempert | | | |
|---|---|---|---|---|---|---|
| | $O_2$-Perm. [GPU] | $O_2/N_2$-Sel. | $O_2$-Perm. [GPU] | $O_2/N_2$-Sel. | Festigkeit [cN/tex] | Bruchdehnung [%] |
| Membran nach Vergleichsbeispiel 4 | 6,2 | 0,8 | 0,09 | 3,2 | 6,2 | 11,3 |

Vergleicht man die Daten aus Tabelle 10 mit denen aus Tabelle 9 so stellt man fest, dass des Herstellungsverfahren für die ungetemperten Membranen aus der EP 0321569 bereits zu stark verdichteten Membranen mit einer schlechten Permeanz führt. Werden diese Membranen noch nach dem schlechten Temperungsverfahren des Standes der Technik getempert, so erhält man Membranen mit einer Permeanz die um den Faktor 20 schlechter ist als die nach dem erfindungsgemäßen Verfahren. Analog verhält es sich mit der Festigkeit und der Bruchdehnung.

Dieses Vergleichsbeispiel zeigt somit, dass alleine mit dem erfindungsgemäßen Temperungsverfahren bereits eine erhebliche Verbesserung der Permeanz und somit der Produktivität der Membranen erhalten wird. Stellt man dann noch nach den erfindungsgemäß bevorzugten Verfahren ungetemperte Membranen mit mesoporöser Struktur her, d.h. mit einer hohen Permeanz, so erhält man Membranen mit einer Kombination aus Selektivität und Permeanz, d.h. Produktivität, die denen des Standes der Technik noch viel weiter überlegen sind.

Bei diesem Vergleichsbeispiel wurde auch beobachtet, dass die Wäsche in EP 0321 569 viel zu kurz war und somit noch zu viel Restlösungsmittel in den Membranen vor der Temperung vorhanden war. Die Temperung von Membranbündeln gemäß EP 0321 569 führte zu Verklebungen im Membranbündel, so dass die Membranen einzeln getempert werden müssen.

**Beispiel 7:**

Die erfindungsgemäßen Membranen zeichnen sich nicht nur durch deutlich bessere anwendungstechnische Daten aus als die Membrane des Standes der Technik, sie unterschieden sich auch strukturell. Mit den Membranen der vorliegenden Erfindung ist es erstmals gelungen Membranen herzustellen, die - ohne Zusatz eines Vernetzers - chemikalienbeständig sind und gleichzeitig eine hohe Produktivität aufweisen. Die strukturellen Parameter dafür verantwortlich sind, sind:

- DMF-Löslichkeit (für Beständigkeit gegenüber Molekulargewichtsabbau)
- Dicke der trennaktiven Schicht im Vergleich zu Gesamtdicke der Membran

Die Dicke der trennaktiven Schicht lässt sich ermitteln aus der Permeabilität und der Permeanz der Membran. Die Permeabilität ist ein Maß der Durchlässigkeit eines Polymermaterials und somit eine Materialeigenschaft, unabhängig von Dicke, Druck oder Fläche. Der Fluss durch eine Hohlfasermembran wird normalerweise ausgedrückt durch die Permeanz, welche im Gegensatz zur Permeabilität ist das die Permeanz nicht für die Dicke normalisiert wird, weil die Schichtdicke einer Hohlfasermembran schwer zu bestimmen ist. Die Schichtdicke der trennaktiven Schicht wird daher ermittelt nach folgender Formel:

$$l_{HFM} = \frac{Permeabilität}{Permeanz} * 1000$$

mit Schichtdicke $l_{HFM}$ in nm, Permeabilität in Barrer ($10^{-10}$ $cm^3$(STP).cm.$cm^{-2}$.$s^{-1}$.$cmHg^{-1}$) und Permeanz in GPU ($10^{-6}$ $cm^3$(STP).$cm^{-2}$.$s^{-1}$$cmHg^{-1}$).

Es wurde gefunden, dass die erfindungsgemäße Membran nach Beispiel 6 eine Schichtdicke der Trennaktiven Schicht von 91 nm aufwies. Die Membran des Standes der Technik nach Vergleichsbeispiel 4 hingegen wies eine Schichtdicke der Trennaktiven Schicht von 1929 nm, d.h. annähernd 2 $\mu$m, auf.

## Patentansprüche

1. Verfahren zur Herstellung von Polyimidmembranen,
   **dadurch gekennzeichnet, dass** es die folgenden Schritte umfasst:

a) Herstellung einer Polyimidmembran aus

mindestens einem Dianhydrid, ausgewählt aus der Gruppe bestehend aus 3,4,3'4'-Benzophenontetracarbonsäuredianhydrid, 1,2,4,5-Benzoltetracarbonsäuredianhydrid, 3,4,3'4'-Biphenyltetracarbonsäuredianhydrid, Oxydiphthalsäuredianhydrid, Sulfonyldiphthalsäuredianhydrid, 1,1,1,3,3,3-Hexafluor-2,2-propylidendiphthalsäuredianhydrid
und
mindestens einem Diisocyanat, ausgewählt aus der Gruppe bestehend aus Toluol-2,4-diisocyanat, Toluol-2,6-diisocyanat, 4,4'-Methylendiphenyl-diisocyanat, 2,4,6-Trimethyl-1,3-phenylendi-isocyanat, 2,3,5,6-Tetramethyl-1,4-phenylendiisocyanat

b) Tempern der Membran bei einer Temperatur der die Membran in einem Abstand bis zu 10 cm, bevorzugt 2 bis 10 cm, umgebenden Atmosphäre von 280 bis zur Glastemperatur des Polymers, bevorzugt 280 bis 370°C, besonders bevorzugt 285 bis 360 °C, ganz besonders bevorzugt 290 bis 350 °C, speziell bevorzugt bei 300 bis 340°C, ganz speziell bevorzugt bei 305 bis 330°C und insbesondere bevorzugt bei 310 bis 320°C,

**dadurch gekennzeichnet,**
**dass** die Membran während der Temperung von einer Gasatmosphäre mit einem Sauerstoffgehalt von kleiner gleich 0,5 Vol. %, bevorzugt einem Inertgas, besonders bevorzugt Stickstoff, mit entsprechend niedrigem Sauerstoffgehalt, umgeben ist bzw. von einem entsprechenden Gasstrom umspült wird.

**2.** Verfahren nach Anspruch 1,

**dadurch gekennzeichnet,**
**dass** die Temperung - ab dem Zeitpunkt an dem die Zieltemperatur für die Temperung erreicht ist - für 15 bis 300 min, bevorzugt für 30 bis 240 min, ganz besonders bevorzugt für 60 bis 120 min und speziell bevorzugt für 60 bis 90 min durchgeführt wird, und/oder
**dass** die Membranen mit einer Aufheizrate von 0.1 bis 10 °C/min, bevorzugt 1 bis 5 °C/min und besonders bevorzugt 1 bis 2 °C/min auf die Temperungstemperatur aufgeheizt werden.

**3.** Verfahren nach Anspruch 1 oder 2,
**dadurch gekennzeichnet,**
**dass** nach dem Tempern beim Abkühlen die, die Membran in einem Abstand von bis zu 10 cm, bevorzugt 2 bis 10 cm, umgebende, Atmosphäre nach dauerhaftem Absinken ihrer Temperatur unter die maximale Temperungstemperatur bis zu einer Temperatur von 200 bis 275°C, besonders bevorzugt 200 bis 270 °C, ganz besonders bevorzugt 200 bis 250°C und speziell bevorzugt 200 bis 220°C der in Anspruch 1 definierten Atmosphäre bzw. dem dort definierten Gasstrom entspricht oder dass nach dem dauerhaften Absinken der Temperatur unter die maximale Temperungstemperatur ein Vakuum angelegt wird.

**4.** Verfahren nach einem der Ansprüche 1 bis 3,
**dadurch gekennzeichnet,**
**dass** der Sauerstoffgehalt in der die Membran in einem Abstand von bis zu 10 cm, bevorzugt 2 bis 10 cm, umgebenden Atmosphäre kleiner gleich 0,25 Vol. % und besonders bevorzugt kleiner gleich 0,1 Vol % beträgt.

**5.** Verfahren nach einem der Ansprüche 1 bis 4,

**dadurch gekennzeichnet,**
**dass** Schritt a) die Unterschritte
a1) Herstellung einer Lösung eines Polyimidpolymers in einem aprotisch dipolaren Lösungsmittel durch Polymerisation entsprechender Monomere
a2) Herstellung einer Gießlösung umfassend das Polyimidpolymer
a3) Herstellung einer Polyimidmembran aus der Gießlösung umfasst,

wobei aus der in Schritt a1) erhaltenen Polymerlösung die Gießlösung in Schritt a2) hergestellt wird, ohne daß das Polyimid zwischen den Schritten a1) und a2) oder vor Schritt a1) in Form eines Feststoffs, insbesondere als getrockneter Feststoffisoliert und wieder aufgelöst wird, und
wobei die Herstellung der Membran durch ein Phaseninversionsverfahren erfolgt.

6. Verfahren nach Anspruch 5,

**dadurch gekennzeichnet, dass**
das für die Herstellung des Polyimids in Stufe a1) verwendete aprotisch dipolare Lösungsmittel ausgewählt wurde aus der Gruppe bestehend aus Dimethylformamid, Dimethylacetamid, N-Methylpyrrolidinon, N-Ethylpyrrolidinon, Sulfolan, Tetrahydrofuran, Dioxan oder Mischungen daraus,
und/oder
dass zur Herstellung der Gießlösung in Schritt a2) wasserlösliche Additive zugesetzt werden, wobei als Additive bevorzugt

flüchtige mit Wasser mischbare Lösungsmittel wie Diethylether, Tetrahydrofuran, Dioxan oder Aceton oder Mischungen daraus und/oder
nicht-Lösungsmittel wie Wasser, Methanol, Ethanol, n-Propanol, Isopropanol, Butanol, Butandiol, Ethylenglykol, Glycerin, Gamma-Butyrolacton oder Mischungen daraus und/oder

Porenbildner, bevorzugt Polyvinylpyrolidinon und/oder
wassermischbare Lösungsmittel wie Dimethylformamid, Dimethylacetamid, N-Methylpyrrolidinon, N-Ethylpyrrolidinon, Sulfolan, Dimethylsulfoxid oder Mischungen daraus

verwendet werden.

7. Verfahren nach einem der Ansprüche 1 bis 4,

**dadurch gekennzeichnet,**
**dass** es in Schritt a) die folgenden Schritte umfasst:

aI) bereitstellen eines, optional getemperten, Polyimidpolymers in Form eines, bevorzugt getrockneten, Feststoffs, bevorzugt eines Pulvers oder Granulats,
aII) Herstellen einer Gießlösung, wobei diese Gießlösung ein Lösungsmittel und den Feststoff aus Schritt aI) umfasst; und
aIII) Bilden einer Hohlfasermembran aus der Gießlösung.

8. Verfahren nach Anspruch 7,
**dadurch gekennzeichnet, dass**

das Pulver in Schritt aI) durch einen Prozess eines mechanischen Temperns, eines thermischen Temperns oder einer Kombination daraus getempert und/oder getrocknet wird, und/oder
dass das Polymerpulver in Schritt aI) über einen Zeitraum von 6 bis 30 Stunden, bevorzugt 10 bis 16 Stunden, bei einer Temperatur von 50-250 °C, bevorzugt 100 bis 200 °C getrocknet und/oder getempert wird.

9. Verfahren nach einem der Ansprüche 5 bis 8,
**dadurch gekennzeichnet, dass**
in den Schritten a3) oder aIII), eine integral asymmetrische Hohlfasermembran hergestellt wird, wobei bevorzugt die Hohlfaser mittels einer Zweistoffdüse aus der Polyimidgießlösung und einer Bore Lösung in einem kontinuierlichen Verfahren gesponnen wird.

10. Verfahren nach Anspruch 9,
**dadurch gekennzeichnet, dass**

die Spinndüse einen Abstand von 5 cm bis 1m, bevorzugt 5 bis 60 cm von einem Fällbad hat,
wobei der Hohlfaden vor dem Eintritt in das Fällbad, bevorzugt in einem Schacht, mit einem, besonders bevorzugt trockenen, auf 25 bis 130 °C, besonders bevorzugt auf 30 bis 80°C, thermostatisierten Gasstrom umspült oder durch eine entsprechende Gasatmosphäre geleitet wird.

11. Verfahren nach Anspruch 10,

**dadurch gekennzeichnet, dass**
als Gas oder Gasstrom Stickstoff, Luft, Argon, Helium, Kohlendioxid, Methan oder andere technische inerte

Gase oder Gemische davon verwendet werden, und/oder
die Gasgeschwindigkeit im Schacht zwischen 0,1 und 10 m/min, bevorzugt zwischen 0,5 und 5 m/min und besonders bevorzugt 1 und 3 m/min beträgt.

**12.** Verfahren nach einem der Ansprüche 9 bis 11,
**dadurch gekennzeichnet, dass**
die Membranen nach Verlassen des Fällbads und vor der Temperung mindestens einer Wäsche mit Wasser bis zu einem Restlösungsmittelgehalt von kleiner gleich 1 Gew. %, bevorzugt kleiner gleich 0,5 Gew. % unterzogen wurden.

**13.** Verfahren nach einem der Ansprüche 9 bis 12,
**dadurch gekennzeichnet, dass**
die Membranen vor der Temperung, bevorzugt aber nach der Wäsche, einem Lösungsmittelaustausch unterzogen wurden,

**14.** Verfahren nach einem der Ansprüche 9 bis 13,
**dadurch gekennzeichnet, dass**
die Membranen vor der Temperung, bevorzugt nach der Wäsche, besonders bevorzugt nach dem Lösungsmittelaustausch, derart getrocknet wurden, dass sie nach der Trocknung einen Gesamtgehalt an Wasser und Lösungsmittel von kleiner gleich 5 Gew.-%, bevorzugt kleiner gleich 3 Gew-%. aufweisen,

**15.** Verfahren nach einem der Ansprüche 9 bis 14,
**dadurch gekennzeichnet, dass**
die Abzugsgeschwindigkeit der Membran zwischen 10 und 80 m/min, bevorzugt zwischen 30 und 70 m/min, beträgt.

**16.** Verfahren nach einem der Ansprüche 9 bis 15,
**dadurch gekennzeichnet, dass**
die Membranen vor der Temperung eine Permeanz für Sauerstoff von größer gleich $8{,}375*10^{-9}$ $mol/m^2sPa$ (25 GPU), bevorzugt größer gleich $16{,}75*10^{-9}$ $mol/m^2sPa$ (50 GPU), besonders bevorzugt $33{,}5*10^{-9}$ bis $670*10^{-9}$ $mol/m^2sPa$ (100 bis 2000 GPU), ganz besonders bevorzugt von $67*10^{-9}$ bis $502{,}5*10^{-9}$ $mol/m^2sPa$ (200 bis 1500 GPU), speziell bevorzugt von $100{,}5*10^{-9}$ bis $335*10^{-9}$ $mol/m^2sPa$ (300 bis 1000 GPU) und ganz speziell bevorzugt von $134*10^{-9}$ bis $268*10^{-9}$ $mol/m^2sPa$ (400 bis 800 GPU) aufweisen.

**17.** Polyimidmembran, erhältlich mit einem Verfahren nach einem der Ansprüche 1 - 16, **dadurch gekennzeichnet, dass**

- es sich bei dem Polyimid um ein Polyimid umfassend

  mindestens einem Dianhydrid, ausgewählt aus der Gruppe bestehend aus 3,4,3'4'-Benzophenontetracarbonsäuredianhydrid, 1,2,4,5-Benzoltetracarbonsäuredianhydrid, 3,4,3'4'-Biphenyltetracarbonsäuredianhydrid, Oxydiphthalsäuredianhydrid, Sulfonyldiphthalsäuredianhydrid, 1,1,1,3,3,3-Hexafluor-2,2-propylidendiphthalsäuredianhydrid
  und
  mindestens einem Diisocyanat, ausgewählt aus der Gruppe bestehend aus Toluol-2,4-diisocyanat, Toluol-2,6-diisocyanat, 4,4'-Methylendiphenyl-diisocyanat, 2,4,6-Trimethyl-1,3-phenylendi-isocyanat, 2,3,5,6-Tetramethyl-1,4-phenylendiisocyanat handelt,

- der Gehalt an polymerfremden und vernetzend wirkenden Substanzen, die mittels kovalenter Bindung in die Polymere eingebaut oder an die Polymerkette angebunden sind und die sich unterscheiden von den zur Herstellung der Polymere eingesetzten Monomeren bzw. den zur Regelung der Kettenlänge dieser Polymere eingesetzten Substanzen bzw. den bei der Herstellung der erfindungsgemäßen Membranen eingesetzten Polymeren oder den aus diesen Polymeren während des Herstellungsverfahrens gebildeten Neben- oder Zwischenprodukten, in der Membran im Bereich von 0 bis 5 Gew. %, bevorzugt 0 bis 1 Gew. % liegt
- sie eine Löslichkeit in Dimethylformamid von 5 bis 95 %, bevorzugt 5 bis 90%, besonders bevorzugt 10 bis 80% und ganz besonders bevorzugt 20 bis 70 % aufweist, bestimmt nach der in der Beschreibung im Abschnitt "Bestimmung der DMF-Löslichkeit" beschriebenen Methode
und
- sie eine Schichtdicke der trennaktiven Schicht von kleiner gleich 1,5 μm, bevorzugt kleiner gleich 1 μm, ganz besonders bevorzugt kleiner gleich 750, speziell bevorzugt kleiner gleich 500 nm, ganz speziell bevorzugt kleiner gleich 250 nm und insbesondere bevorzugt kleiner gleich 100 nm aufweist.

**18.** Polyimidmembran nach Anspruch 17, **dadurch gekennzeichnet,** **dass** es sich bei dem Polyimid um ein Polyimid mit folgender Zusammensetzung:

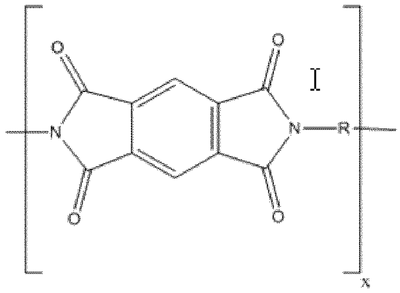

(A)

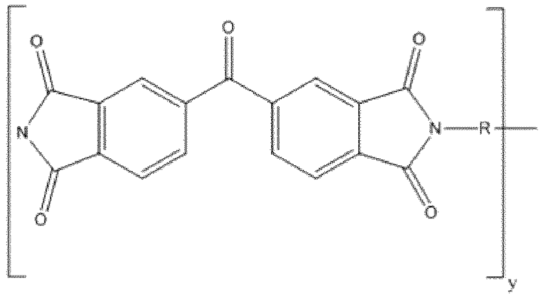

(B)

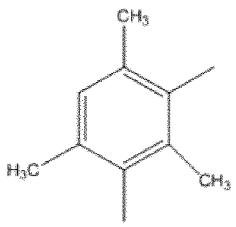

(L1)

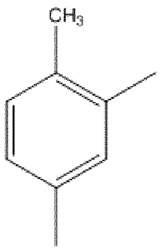

(L2)

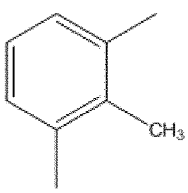

(L3)

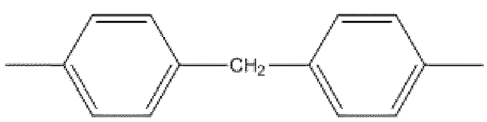

(L4)

mit $0 \leq x \leq 0{,}5$ und $1 \geq y \geq 0{,}5$ handelt und R einem oder mehreren, gleichen oder unterschiedlichen Resten, ausgewählt aus der Gruppe bestehend aus den Resten L1, L2, L3 und L4, entspricht, bevorzugt, dass es sich um ein Polymer mit X = 0, Y = 1 und R bestehend zu 64 mol % aus L2, zu 16 mol % aus L3 und zu 20 mol % aus L4

oder um ein Polymer mit der Zusammensetzung x = 0,4, y = 0,6 und R bestehend zu 80 mol % aus L2, zu 20 mol % aus L3 handelt.

**19.** Polyimidmembranen nach einem der Ansprüche 17 oder 18,

**dadurch gekennzeichnet, dass**
es sich bei den Polyimidmembranen um

integral asymmetrische Flachmembranen auf einem Trägervlies, bevorzugt einem Trägervlies aus Polyphenylensulfid, Polyethylenterephtalat oder Polypropylen,
oder um integral asymmetrische Hohlfasermembranen handelt.

**20.** Verwendung von Polyimidhohlfasermembranen nach einem der Ansprüche 17 bis 19 zur Auftrennung von Gasgemischen, bevorzugt

zur Auftrennung von Methan und Kohlendioxid
oder
zur Auftrennung von Sauerstoff und Stickstoff
oder
zur Abtrennung von Wasserstoff aus Prozessgasen
oder
zur Abtrennung von Wasserdampf und/oder Helium aus Gasen oder Gasgemischen.

## Claims

**1.** Method of producing polyimide membranes, **characterized in that** it comprises the steps of:

a) producing a polyimide membrane from one or more than one dianhydride selected from the group consisting of 3,4,3',4'-benzophenonetetracarboxylic dianhydride, 1,2,4,5-benzenetetracarboxylic dianhydride, 3,4,3',4'-biphenyltetracarboxylic dianhydride, oxydiphthalic dianhydride, sulfonyldiphthalic dianhydride, 1,1,1,3,3,3-hexafluoro-2,2-propylidenediphthalic dianhydride, and
one or more than one diisocyanate selected from the group consisting of 2,4-tolylene diisocyanate, 2,6-tolylene diisocyanate, 4,4'-methylenediphenyl diisocyanate, 2,4,6-trimethyl-1,3-phenylene diisocyanate, 2,3,5,6-tetramethyl-1,4-phenylene diisocyanate,
b) annealing the membrane at a temperature in the range from 280 to the glass transition temperature of the polymer, preferably 280 to 370°C, more preferably 285 to 360°C, still more preferably 290 to 350°C, yet still more preferably at 300 to 340°C, yet still even more preferably at 305 to 330°C and most preferably at 310 to 320°C for the atmosphere surrounding the membrane at a distance of up to 10 cm, preferably 2 to 10 cm,

**characterized in that**
a gas atmosphere having an oxygen content of not more than 0.5% by volume, preferably an inert gas, more preferably nitrogen, of correspondingly low oxygen content surrounds the membrane during the anneal, and/or a corresponding gas stream sweeps around the membrane during the anneal.

**2.** Method according to Claim 1,

**characterized in that**
the anneal is conducted for 15 to 300 min, preferably for 30 to 240 min, more preferably for 60 to 120 min and still more preferably for 60 to 90 min from the time at which the target temperature for the anneal is attained, and/or **in that**
the membranes are heated to the annealing temperature at a heating rate of 0.1 to 10°C/min, preferably 1 to 5°C/min and more preferably 1 to 2°C/min.

**3.** Method according to Claim 1 or 2,
**characterized in that**
after the anneal, in the course of cooling, after the temperature of the atmosphere surrounding the membrane at a distance of up to 10 cm, preferably 2 to 10 cm, has permanently dropped to below the maximum annealing temperature

down to a temperature of 200 to 275°C, more preferably 200 to 270°C, still more preferably 200 to 250°C and yet still more preferably 200 to 220°C the atmosphere corresponds to the atmosphere defined in Claim 1 and/or the gas stream defined in Claim 1, or **in that** after the temperature has permanently dropped to below the maximum annealing temperature a vacuum is applied.

4. Method according to any of Claims 1 to 3,
**characterized in that**
the oxygen content of the atmosphere surrounding the membrane at a distance of up to 10 cm, preferably 2 to 10 cm, is not more than 0.25% by volume and more preferably not more than 0.1% by volume.

5. Method according to any of Claims 1 to 4, **characterized in that**
step a) comprises the sub-steps of

a1) producing a solution of a polyimide polymer in an aprotic dipolar solvent by polymerizing corresponding monomers, and
a2) producing a casting solution comprising the polyimide polymer, and
a3) producing a polyimide membrane from the casting solution,

wherein the casting solution is produced in step a2) from the polymer solution obtained in step a1) without the polyimide between steps a1) and a2) or before step a1) being isolated in the form of a solid material, particularly not as a dried solid material, and redissolved, and
wherein the membrane is produced by a phase inversion method.

6. Method according to Claim 5,

**characterized in that**
the aprotic dipolar solvent used for producing the polyimide in stage a1) was selected from the group consisting of dimethylformamide, dimethylacetamide, N-methylpyrrolidinone, N-ethylpyrrolidinone, sulfolane, tetrahydrofuran, dioxane or mixtures thereof, and/or **in that**
water-soluble additives are admixed for producing the casting solution in step a2), wherein the additives used are preferably

volatile water-miscible solvents such as diethyl ether, tetrahydrofuran, dioxane or acetone or mixtures thereof
and/or
nonsolvents such as water, methanol, ethanol, n-propanol, isopropanol, butanol, butanediol, ethylene glycol, glycerol, gamma-butyrolactone or mixtures thereof
and/or
pore formers, preferably polyvinyl-pyrrolidinone
and/or
water-miscible solvents such as dimethylformamide, dimethylacetamide, N methylpyrrolidinone, N-ethylpyrrolidinone, sulfolane, dimethyl sulfoxide or mixtures thereof.

7. Method according to any of Claims 1 to 4, **characterized in that**
it comprises the following steps within step a):

aI) providing an optionally annealed polyimide polymer in the form of a preferably dried solid material, preferably in the form of a powder or in the form of a pellet material,
aII) producing a casting solution, wherein this casting solution comprises a solvent and the solid material from step aI); and
aIII) forming a hollow fibre membrane from the casting solution.

8. Method according to Claim 7,

**characterized in that**
the powder is annealed and/or dried in step aI) by a process of mechanical annealing, thermal annealing or a combination thereof,
and/or **in that**

the polymer powder is dried and/or annealed in step aI) at a temperature of 50-250°C, preferably 100 to 200°C, for a period of 6 to 30 hours, preferably 10 to 16 hours.

**9.** Method according to any of Claims 5 to 8,
**characterized in that**
an integrally asymmetrical hollow fibre membrane is produced in steps a3) or aIII), wherein the hollow fibre is preferably spun from the polyimide casting solution and a bore solution in a continuous process using a two-material die.

**10.** Method according to Claim 9,
**characterized in that**

the spinning die is at a distance of 5 cm to 1 m, preferably 5 to 60 cm from a precipitation bath,
wherein the hollow fibre before entry into the precipitation bath is, preferably in a shaft, subjected to the flow of a, more preferably dry, gas stream thermostated to 25 to 130°C, more preferably to 30 to 80°C, or is passed through a corresponding gas atmosphere.

**11.** Method according to Claim 10,
**characterized in that**

the gas or gas stream used is nitrogen, air, argon, helium, carbon dioxide, methane or other industrial inert gases or mixtures thereof, and/or **in that**
the gas velocity in the shaft is between 0.1 and 10 m/min, preferably between 0.5 and 5 m/min and more preferably 1 and 3 m/min.

**12.** Method according to any of Claims 9 to 11, **characterized in that**
the membranes were subjected to one or more than one wash with water down to a residual solvent content of not more than 1% by weight, preferably not more than 0.5% by weight, after leaving the precipitation bath and before the anneal.

**13.** Method according to any of Claims 9 to 12, **characterized in that**
the membranes were subjected to a solvent exchange before the anneal, but preferably after the wash.

**14.** Method according to any of Claims 9 to 13, **characterized in that**
before the anneal, the membranes were dried, preferably after the wash, more preferably after the solvent exchange, such that they have a total water and solvent content of not more than 5% by weight, preferably not more than 3% by weight after the drying step.

**15.** Method according to any of Claims 9 to 14, **characterized in that**
the membrane haul-off speed is between 10 and 80 m/min, preferably between 30 and 70 m/min.

**16.** Method according to any of Claims 9 to 15, **characterized in that**
the membranes before annealing have an oxygen permeance of not less than $8.375*10^{-9}$ mol/$m^2$sPa (25 GPU), preferably not less than $16.75*10^{-9}$ mol/$m^2$sPa (50 GPU), more preferably in the range from $33.5*10^{-9}$ mol/$m^2$sPa to $670*10^{-9}$ mol/$m^2$sPa (100 to 2000 GPU), still more preferably from $67*10^{-9}$ mol/$m^2$sPa to $502.5*10^{-9}$ mol/$m^2$sPa (200 to 1500 GPU), yet still more preferably from $100.5*10^{-9}$ mol/$m^2$sPa to $335*10^{-9}$ mol/$m^2$sPa (300 to 1000 GPU) and yet still even more preferably from $134*10^{-9}$ mol/$m^2$sPa to $268*10^{-9}$ mol/$m^2$sPa (400 to 800 GPU).

**17.** Polyimide membrane obtainable by a process according to any of Claims 1-16,
**characterized in that**

- the polyimide is a polyimide comprising one or more than one dianhydride selected from the group consisting of 3,4,3',4'-benzophenonetetracarboxylic dianhydride, 1,2,4,5-benzenetetracarboxylic dianhydride, 3,4,3',4'-biphenyltetracarboxylic dianhydride, oxydiphthalic dianhydride, sulfonyldiphthalic dianhydride, 1,1,1,3,3,3-hexafluoro-2,2-propylidenediphthalic dianhydride, and
one or more than one diisocyanate selected from the group consisting of 2,4-tolylene diisocyanate, 2,6-tolylene diisocyanate, 4,4'-methylenediphenyl diisocyanate, 2,4,6-trimethyl-1,3-phenylene diisocyanate, 2,3,5,6-tetramethyl-1,4-phenylene diisocyanate,

- the level of polymer-extraneous and crosslinking substances in the membrane which become incorporated in the polymers, or attached to the polymer chain, via covalent bonds and which differ from the monomers used for producing the polymers, and/or the substances used for controlling the chain length of these polymers, and/or the polymers used in producing the membranes of the present invention, or the secondary or intermediate products formed from these polymers during the production process, is in the range from 0% to 5% by weight, preferably 0% to 1% by weight,
- it has a solubility in dimethylformamide of 5 to 95%, preferably 5 to 90%, more preferably 10 to 80% and still more preferably 20 to 70%, determined by method described in the description in the "Determination of DMF solubility" section
and
- it has a layer thickness of the active separating layer of not more than 1.5 μm, preferably not more than 1 μm, more preferably not more than 750, still more preferably not more than 500 nm, yet still more preferably not more than 250 nm and yet still even more preferably not more than 100 nm.

**18.** Polyimide membrane according to Claim 17, **characterized in that** the polyimide is a polyimide of the following composition:

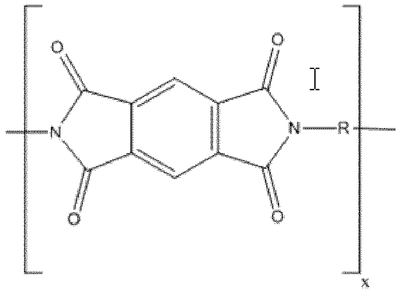

(A)

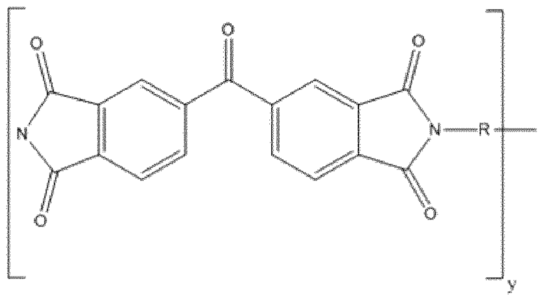

(B)

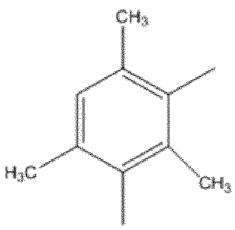

(L1)

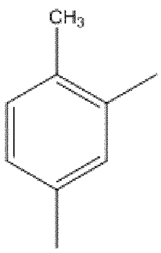

(L2)

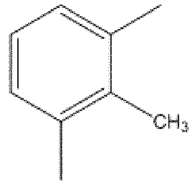

(L3)

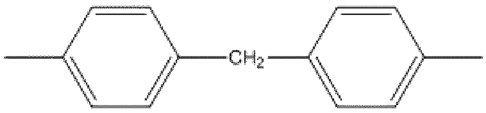

(L4)

where 0 ≤ x ≤ 0.5 and 1 ≥ y ≥ 0.5 and R represents one or more, identical or different moieties selected from the group consisting of the moieties L1, L2, L3 and L4, preferably **in that** the polyimide is a polymer where X = 0, Y = 1 and R consists of 64 mol% L2, 16 mol% L3 and 20 mol% L4, or is a polymer having the composition x = 0.4, y = 0.6 and R consists of 80 mol% L2 and 20 mol% L3.

**19.** Polyimide membranes according to either of Claims 17 and 18,

**characterized in that**
the polyimide membranes are

integrally asymmetric flat sheet membranes on a backing fleece, preferably a backing fleece of polyphenylene sulfide, polyethylene terephthalate or polypropylene,
or integrally asymmetrical hollow fibre membranes.

**20.** Use of polyimide hollow fibre membranes according to any of Claims 17 to 19 for separating gas mixtures, preferably

for separating methane and carbon dioxide,
or
for separating oxygen and nitrogen,
or
for separating hydrogen from process gases,
or
for separating water vapour and/or helium from gases or gas mixtures.

## Revendications

**1.** Procédé pour la fabrication de membranes de polyimide, **caractérisé en ce qu'**il comprend les étapes suivantes :

a) fabrication d'une membrane de polyimide à partir d'au moins un dianhydride, choisis dans le groupe constitué par le dianhydride de l'acide 3,4,3'4'-benzophénonetétracarboxylique, le dianhydride de l'acide 1,2,4,5-benzènetétracarboxylique, le dianhydride de l'acide 3,4,3'4'-biphényltétracarboxylique, le dianhydride de l'acide oxydiphtalique, le dianhydride de l'acide sulfonyldiphtalique, le dianhydride de l'acide 1,1,1,3,3,3-hexafluoro-2,2-propylidènediphtalique et
d'au moins un diisocyanate, choisi dans le groupe constitué par le toluène-2,4-diisocyanate, le toluène-2,6-diisocyanate, le 4,4'-méthylènediphényldiisocyanate, le 2,4,6-triméthyl-1,3-phénylènediisocyanate, le 2,3,5,6-tétraméthyl-1,4-phénylènediisocyanate
b) traitement à chaud de la membrane à une température de l'atmosphère entourant la membrane à une distance de jusqu'à 10 cm, de préférence de 2 à 10 cm de 280°C jusqu'à la température de transition vitreuse du polymère, de préférence de 280 à 370°C, de manière particulièrement préférée de 285 à 360°C, de manière tout particulièrement préférée de 290 à 350°C, de manière spécialement préférée de 300 à 340°C, de manière tout spécialement préférée de 305 à 330°C et en particulier de préférence de 310 à 320°C,

**caractérisé en ce que** la membrane est entourée pendant le traitement à chaud d'une atmosphère gazeuse présentant une teneur en oxygène inférieure à 0,5% en volume, de préférence d'un gaz inerte, de manière particulièrement préférée d'azote, présentant une teneur en oxygène basse correspondante ou est balayée tout autour par

un flux gazeux correspondant.

2. Procédé selon la revendication 1, **caractérisé en ce que** le traitement à chaud - à partir du moment auquel la température cible pour le traitement à chaud est atteinte - est réalisé pendant 15 à 300 minutes, de préférence pendant 30 à 240 minutes, de manière tout particulièrement préférée pendant 60 à 120 minutes et de manière spécialement préférée pendant 60 à 90 minutes et/ou
**en ce que** les membranes sont chauffées à une vitesse de chauffage de 0,1 à 10°C/min, de préférence de 1 à 5°C/min et de manière particulièrement préférée de 1 à 2°C/min à la température de traitement à chaud.

3. Procédé selon la revendication 1 ou 2, **caractérisé en ce qu'**après le traitement à chaud, lors du refroidissement, l'atmosphère entourant la membrane à une distance de jusqu'à 10 cm, de préférence de 2 à 10 cm, correspond, après l'abaissement durable de sa température sous la température maximale de traitement à chaud, jusqu'à une température de 200 à 275°C, de manière particulièrement préférée de 200 à 270°C, de manière tout particulièrement préférée de 200 à 250°C et de manière spécialement préférée de 200 à 220°C, à l'atmosphère définie dans la revendication 1 ou au flux gazeux qui y est défini ou **en ce qu'**un vide est appliqué après l'abaissement durable de la température sous la température maximale de traitement à chaud.

4. Procédé selon l'une quelconque des revendications 1 à 3, **caractérisé en ce que** la teneur en oxygène dans l'atmosphère entourant la membrane à une distance de jusqu'à 10 cm, de préférence de 2 à 10 cm, est inférieure à 0,25% en volume et de manière particulièrement préférée inférieure à 0,1% en volume.

5. Procédé selon l'une quelconque des revendications 1 à 4, **caractérisé en ce que** l'étape a) comprend les sous-étapes

   a1) préparation d'une solution d'un polymère de polyimide dans un solvant aprotique dipolaire par polymérisation de monomères correspondants
   a2) préparation d'une solution à couler comprenant le polymère de polyimide
   a3) préparation d'une membrane de polyimide à partir de la solution à couler,

   la solution à couler étant préparée dans l'étape a2) à partir de la solution de polymère obtenue dans l'étape a1) sans que le polyimide ne soit isolé sous forme de solide, en particulier sous forme de solide séché, et de nouveau dissous entre les étapes a1) et a2) ou avant l'étape a1) et
   la fabrication de la membrane ayant lieu par un procédé à inversion de phases.

6. Procédé selon la revendication 5, **caractérisé en ce que** le solvant aprotique dipolaire utilisé pour la préparation du polyimide dans l'étape a1) a été choisi dans le groupe constitué par le diméthylformamide, le diméthylacétamide, la N-méthylpyrrolidinone, la N-éthylpyrrolidinone, le sulfolane, le tétrahydrofuranne, le dioxane ou leurs mélanges et/ou

   **en ce qu'**on ajoute, pour la préparation de la solution à couler dans l'étape a2), des additifs solubles dans l'eau, en utilisant, comme additifs, de préférence
   des solvants volatils miscibles à l'eau, tels que le diéthyléther, le tétrahydrofuranne, le dioxane ou l'acétone ou des mélanges de ceux-ci et/ou des non-solvants, tels que l'eau, le méthanol, l'éthanol, le n-propanol, l'isopropanol, le butanol, le butanediol, l'éthylèneglycol, le glycérol, la gamma-butyrolactone ou des mélanges de ceux-ci et/ou
   des agents porogènes, de préférence la polyvinylpyrrolidone, et/ou
   des solvants miscibles à l'eau, tels que le diméthylformamide, le diméthylacétamide, la N-méthylpyrrolidinone, la N-éthylpyrrolidinone, le sulfolane, le diméthylsulfoxyde ou des mélanges de ceux-ci.

7. Procédé selon l'une quelconque des revendications 1 à 4, **caractérisé en ce qu'**il comprend les étapes suivantes dans l'étape a) :

   aI) préparation d'un polymère de polyimide éventuellement traité à chaud sous forme d'un solide, de préférence séché, de préférence sous forme d'une poudre ou d'un granulat,
   aII) préparation d'une solution à couler, cette solution à couler comprenant un solvant et le solide de l'étape aI) ; et
   aIII) formation d'une membrane à fibres creuses à partir de la solution à couler.

8. Procédé selon la revendication 7, **caractérisé en ce que** la poudre dans l'étape aI) est traitée à chaud et/ou séchée par un procédé de traitement à chaud mécanique, un procédé de traitement à chaud thermique ou par une combinaison de ceux-ci et/ou
**en ce que** la poudre polymère dans l'étape aI) est séchée et/ou traitée à chaud pendant une période de 6 à 30 heures, de préférence de 10 à 16 heures, à une température de 50-250°C, de préférence de 100 à 200°C.

**9.** Procédé selon l'une quelconque des revendications 5 à 8, **caractérisé en ce qu'**on prépare, dans les étapes a3) ou aIII), une membrane en fibres creuses asymétrique d'une pièce, la fibre creuse étant de préférence filée au moyen d'une buse à deux substances à partir de la solution à couler de polyimide et d'une solution de Bore (mélange eau/solvant(s)) dans un procédé continu.

**10.** Procédé selon la revendication 9, **caractérisé en ce que** la filière présente une distance de 5 cm à 1 m, de préférence de 5 à 60 cm d'un bain de précipitation, la fibre creuse étant balayée tout autour, avant l'entrée dans le bain de précipitation, de préférence dans un conduit, par un flux gazeux, de manière particulièrement préférée sec, thermostaté à 25 jusqu'à 130°C, de manière particulièrement préférée à 30 jusqu'à 80°C, ou étant guidée à travers une atmosphère gazeuse correspondante.

**11.** Procédé selon la revendication 10, **caractérisé en ce qu'**on utilise, comme gaz ou flux gazeux, de l'azote, de l'air, de l'argon, de l'hélium, du dioxyde de carbone, du méthane ou d'autres gaz inertes techniques ou des mélanges de ceux-ci et/ou
la vitesse du gaz dans le conduit étant de préférence située entre 0,1 et 10 m/min, de préférence entre 0,5 et 5 m/min et de manière particulièrement préférée entre 1 et 3 m/min.

**12.** Procédé selon l'une quelconque des revendications 9 à 11, **caractérisé en ce que** les membranes sont soumises, après avoir quitté le bain de précipitation et avant le traitement à chaud, à au moins un lavage à l'eau jusqu'à une teneur résiduelle en solvant inférieur à 1% en poids, de préférence inférieure à 0,5% en poids.

**13.** Procédé selon l'une quelconque des revendications 9 à 12, **caractérisé en ce que** les membranes sont soumises, avant le traitement à chaud, mais de préférence après le lavage, à un échange de solvant.

**14.** Procédé selon l'une quelconque des revendications 9 à 13, **caractérisé en ce que** les membranes sont séchées avant le traitement à chaud, de préférence après le lavage, de manière particulièrement préférée après l'échange de solvant, de manière telle qu'elles présentent après le séchage une teneur totale en eau et en solvant inférieure à 5% en poids, de préférence inférieure à 3% en poids.

**15.** Procédé selon l'une quelconque des revendications 9 à 14, **caractérisé en ce que** la vitesse d'extraction de la membrane est située entre 10 et 80 m/min, de préférence entre 30 et 70 m/min.

**16.** Procédé selon l'une quelconque des revendications 9 à 15, **caractérisé en ce que** les membranes présentent, avant le traitement à chaud, une perméabilité pour l'oxygène supérieure à $8,375*10^{-9}$ mole/$m^2$sPa (25 GPU), de préférence supérieure à $16,75*10^{-9}$ mole/$m^2$sPa (50 GPU), de manière particulièrement préférée de $33,5*10^{-9}$ à $670*10^{-9}$ mole/$m^2$sPas (100 à 2000 GPU), de manière tout particulièrement préférée de $67*10^{-9}$ à $502,51*10^{-9}$ mole/$m^2$sPa (200 à 1500 GPU), de manière spécialement préférée de $100,5*10^{-9}$ à $335*10^{-9}$ mole/$m^2$sPa (300 à 1000 GPU) et de manière tout spécialement préférée de $134*10^{-9}$ à $268*10^{-9}$ mole/$m^2$sPa (400 à 800 GPU) .

**17.** Membrane de polyimide, pouvant être obtenue par un procédé selon l'une quelconque des revendications 1-16, **caractérisée en ce que**

- il s'agit, pour le polyimide, d'un polyimide comprenant au moins un dianhydride, choisi dans le groupe constitué par le dianhydride de l'acide 3,4,3'4'-benzophénonetétracarboxylique, le dianhydride de l'acide 1,2,4,5-benzènetétracarboxylique, le dianhydride de l'acide 3,4,3'4'-biphényltétracarboxylique, le dianhydride de l'acide oxydiphtalique, le dianhydride de l'acide sulfonyldiphtalique, le dianhydride de l'acide 1,1,1,3,3,3-hexafluoro-2,2-propylidènediphtalique et
au moins un diisocyanate, choisi dans le groupe constitué par le toluène-2,4-diisocyanate, le toluène-2,6-diisocyanate, le 4,4'-méthylènediphényldiisocyanate, le 2,4,6-triméthyl-1,3-phénylènediisocyanate, le 2,3,5,6-tétraméthyl-1,4-phénylènediisocyanate,
- la teneur en substances étrangères au polymère et à effet réticulant, qui sont incorporées dans le polymère ou liées à la chaîne polymère par une liaison covalente et qui se distinguent des monomères utilisés pour la préparation des polymères ou des substances utilisées pour la régulation de la longueur de chaîne de ces polymères ou des polymères utilisés lors de la fabrication des membranes selon l'invention ou des produits

secondaires ou intermédiaires formés à partir de ces polymères pendant le procédé de fabrication, dans la membrane se situe dans la plage de 0 à 5% en poids, de préférence 0 à 1% en poids,
- elle présente une solubilité dans le diméthylformamide de 5 à 95%, de préférence de 5 à 90%, de manière particulièrement préférée de 10 à 80% et de manière tout particulièrement préférée de 20 à 70%, déterminée selon la méthode décrite dans la description dans la section "Détermination de la solubilité dans le DMF" et
- elle présente une épaisseur de couche de la couche active en séparation inférieure à 1,5 μm, de préférence inférieure à 1 μm, de manière tout particulièrement préférée inférieure à 750 nm, de manière spécialement préférée inférieure à 500 nm, de manière tout spécialement préférée inférieure à 250 nm et en particulier de préférence inférieure à 100 nm.

**18.** Membrane de polyimide selon la revendication 17, **caractérisée en ce qu'**il s'agit, pour le polyimide, d'un polyimide présentant la composition suivante :

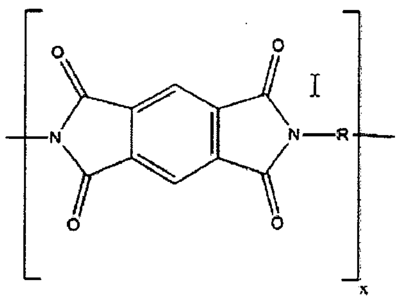

(A)

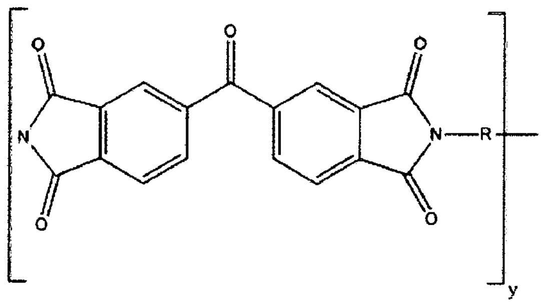

(B)

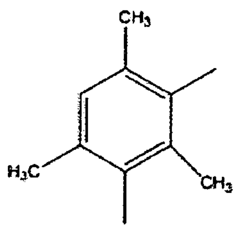

(L1)

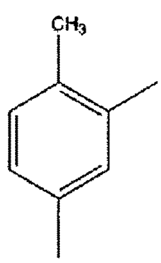

(L2)

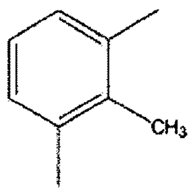

(L3)

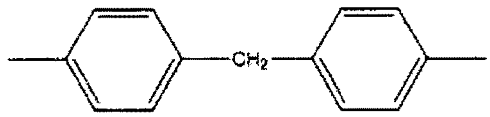

(L4)

où $0 \leq x \leq 0,5$ et $1 \geq y \geq 0,5$ et R représente un ou plusieurs radicaux identiques ou différents, choisis dans le groupe constitué par les radicaux L1, L2, L3 et L4, de préférence **en ce qu'**il s'agit d'un polymère présentant x = 0, y = 1 et R étant constitué à raison de 64% en mole de L2, à raison de 16% en mole de L3 et à raison de 20% en mole de L4 ou d'un polymère présentant la composition x = 0,4, y = 0,6 et R étant constitué à raison de 80% en mole de L2 et à raison de 20% en mole de L3.

**19.** Membranes de polyimide selon l'une quelconque des revendications 17 ou 18, **caractérisées en ce qu'**il s'agit, pour les membranes de polyimide, de membranes planes asymétriques d'une pièce sur un non-tissé support, de préférence un non-tissé en poly(sulfure de phénylène), en poly(téréphtalate d'éthylène) ou en polypropylène, ou de membranes à fibres creuses asymétriques d'une pièce.

**20.** Utilisation de membrane à fibres creuses de polyimide selon l'une quelconque des revendications 17 à 19 pour la séparation de mélanges gazeux, de préférence pour la séparation de méthane et de dioxyde de carbone ou

pour la séparation d'oxygène et d'azote ou
pour la séparation d'hydrogène à partir de gaz de procédé ou
pour la séparation de vapeur d'eau et/ou d'hélium à partir de gaz ou de mélanges gazeux.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20060156920 A
- WO 04050223 A
- US 7018445 B
- US 5635067 A
- EP 1457253 A
- US 7169885 B
- US 20040177753 A
- US 7025804 B
- US 2006156920 A
- WO 2006092677 A
- WO 2007125367 A
- WO 200006293 A
- WO 2011009919 A
- WO 2006068626 A
- EP 0321569 A


### In der Beschreibung aufgeführte Nicht-Patentliteratur


- **J.N BARSEMA et al.** *J. of Membrane Science,* 2003, vol. 216, 195-205
- **J. REN et al.** *J. of Membrane Science,* 2004, vol. 241, 305-314
- **LIU et al.** *Chem. Eng. Sci.,* 2005, vol. 60, 6674-6686
- **J. REN et al.** *J. of Membrane Science,* 2005, vol. 248, 177-188
- *CHEMICAL ABSTRACTS,* 9046-51-9
- *CHEMICAL ABSTRACTS,* 134119-41-8